# EUROPÄISCHE PATENTSCHRIFT

(11) **EP 3 703 912 B1**
(45) Veröffentlichungstag und Bekanntmachung des Hinweises auf die Patenterteilung: **09.11.2022**
(21) Anmeldenummer: 18822033.9
(22) Anmeldetag: 12.12.2018
(51) Int. Cl.: B25H 1/14, B23D 47/02, B27B 5/16

(54) **STÜTZZUSATZEINRICHTUNG FÜR EINE WERKSTÜCKAUFLAGEEINRICHTUNG**
SUPPLEMENTARY SUPPORT ASSEMBLY FOR A WORKPIECE SUPPORT ASSEMBLY
DISPOSITIF AUXILIAIRE DE SUPPORT DESTINÉ À UN DISPOSITIF D'APPUI DE PIÈCE

(30) Priorität: 14.12.2017 DE 102017130042
(43) Veröffentlichungstag der Anmeldung: 09.09.2020
(73) Patentinhaber: Festool GmbH, 73240 Wendlingen am Neckar (DE)
(72) Erfinder: HÖLDERLE, Rüdiger, 73101 Aichelberg (DE)
(74) Vertreter: Patentanwälte Bregenzer und Reule Partnerschaftsgesellschaft mbB
(86) Internationale Anmeldenummer: PCT/EP2018/084523
(87) Internationale Veröffentlichungsnummer: WO 2019/115602

(56) Entgegenhaltungen:
- AU-B2- 566 592
- DE-C1- 3 721 820
- GB-A- 2 406 539
- US-A- 4 677 920
- US-A- 5 105 862
- US-A- 5 644 964
- US-A1- 2008 277 025
- US-A1- 2011 232 805

## Beschreibung

Die Erfindung betrifft eine Stützzusatzeinrichtung für eine Werkstückauflageeinrichtung oder als Bestandteil einer Werkstückauflageeinrichtung einer halbstationären Werkzeugmaschine, insbesondere einer Sägemaschine, gemäß dem Oberbegriff des Anspruchs 1.

Eine Stützzusatzeinrichtung dieser Art ist aus US 5,644,964 bekannt.

Eine weitere Stützzusatzeinrichtung wird von der Anmelderin angeboten. Die Stützzusatzeinrichtung weist eine Adapterplatte auf, also einen Trägerkörper, der an den Grundkörper oder das Grundgestell einer Kapp-Zug-Säge angebaut werden kann. Der Trägerkörper vergrößert mit einer Zusatz-Auflagefläche die beispielsweise vom Sägetisch der Kappsäge bereitgestellte Basis-Auflagefläche für das Werkstück. Die Stützzusatzeinrichtung weist zudem einen verstellbaren Queranschlagkörper auf, so dass das Werkstück nicht nur auf die Zusatz-Auflagefläche, sondern auch an eine Queranschlagfläche des Queranschlagkörpers anlegebar ist. Das Werkstück kann somit sandwichartig zwischen einerseits der Queranschlagfläche der Stützzusatzeinrichtungen andererseits einer vertikal hochstehenden Anlagefläche, die näher beim Sägeaggregat bzw. beim Antrieb der Werkzeugmaschine ist, abgestützt sein. Die Stützzusatzeinrichtung ist insbesondere zur Bearbeitung von Profilteilen geeignet, die in Räumen angebracht werden können, beispielsweise zwischen einer Seitenwand und einer Decke eines Raumes.

Allerdings ist die bekannte Stützzusatzeinrichtung für manche Einsatzfälle nicht flexibel genug.

Es ist daher die Aufgabe der vorliegenden Erfindung, eine verbesserte Stützzusatzeinrichtung bereitzustellen.

Zur Lösung der Aufgabe ist eine Stützzusatzeinrichtung gemäß der technischen Lehre des Anspruchs 1 vorgesehen.

Ferner betrifft die Erfindung eine Werkstückauflageeinrichtung, die eine Stützzusatzeinrichtung obiger Art umfasst.

Bei der Werkstückauflageeinrichtung ist vorteilhaft, wenn sie eine sich insbesondere quer zu einer Arbeitsrichtung des Arbeitswerkzeugs der Werkzeugmaschine erstreckende Zusatzeinrichtung zur lösbaren Befestigung an der Werkzeugmaschine bildet. Beispielsweise ist die Werkstückauflageeinrichtung seitlich neben oder an einem Grundgestell der Werkzeugmaschine befestigbar und verlängert somit eine Werkstückauflagefläche der Werkzeugmaschine.

Weiterhin betrifft die Erfindung eine Werkzeugmaschine, beispielsweise eine Sägemaschine, insbesondere eine Kapp-Zug-Sägemaschine, die eine Werkstückauflageeinrichtung sowie eine Stützzusatzeinrichtung nach einem der vorhergehenden Ansprüche umfasst. Die Werkstückauflageeinrichtung kann einen integralen Bestandteil der Werkzeugmaschine bilden, beispielsweise an deren Grundgestell vorhanden sein. Sie kann aber auch eine Zusatzeinrichtung sein, die an die Werkzeugmaschine anbaubar und/oder die mit der Werkzeugmaschine lösbar verbindbar ist.

Beispielsweise ist der Auflagekörper bezüglich des Trägerkörpers schwenkbar und/oder schiebebeweglich gelagert. Somit kann der Auflagekörper in eine optimale Position gebracht werden, in der dann die Zusatz-Auflagefläche relativ zur Basis-Auflagefläche günstig positioniert ist. Die Stützzusatzeinrichtung ermöglicht somit eine Vergrößerung der Basis-Auflagefläche auch ohne die Queranschlagfläche oder den Queranschlagkörper, so dass sie beispielsweise für plattenartige und leistenartige Werkstücke günstig einsetzbar ist. Wenn die Queranschlagfläche dazukommt, können beispielsweise auch die vorgenannten Deckenleisten bequem bearbeitet werden.

Bereits durch die Verstellbarkeit des Auflagekörpers kann der Queranschlagkörper relativ zur Werkstückauflageeinrichtung verstellt werden.

Die Zusatz-Auflagefläche kann relativ zu der Basis-Auflagefläche in mindestens einer Relativposition einen Abstand aufweisen, so dass ein Zwischenraum zwischen den beiden Auflageflächen vorhanden ist. Das Werkstück kann diesen Zwischenraum beispielsweise überbrücken, so dass es auf die "Lücke" in der Auflagefläche nicht ankommt.

Die Zusatz-Auflagefläche und die Basis-Auflagefläche fluchten zumindest im Wesentlichen miteinander. Es ist möglich, dass die Zusatz-Auflagefläche etwas unterhalb oder oberhalb einer Ebene, beispielsweise einer horizontalen Ebene, der Basis-Auflagefläche ist, z.B. etwas unterbündig ist. Ein auf der Basis-Auflagefläche aufliegendes Werkstück kann flächig oder im Wesentlichen flächig auch auf der Zusatz-Auflagefläche aufliegen. Die Zusatz-Auflagefläche und die Basis-Auflagefläche sind vorliegend vorzugsweise Planflächen oder ebene Flächen. Dabei ist es möglich, dass an der Zusatz-Auflagefläche und/oder der Basis-Auflagefläche Rippen oder eine Verrippung vorgesehen ist, wobei Stützflächen oder Stützkonturen der Zusatz-Auflagefläche und der Basis-Auflagefläche in einer Ebene liegen.

Es kann vorgesehen sein, dass eine Queranschlagfläche einen Bestandteil des Auflagekörpers bildet. So hat dieser beispielsweise einen hochstehenden Abschnitt, welcher eine Queranschlagfläche bereitstellt. Es kann ein Auflagekörper vorgesehen sein, der die Zusatz-Auflagefläche und die mindestens eine Queranschlagfläche aufweist, die dann zu der Zusatz-Auflagefläche winkelig, beispielsweise rechtwinkelig ist.

Der Queranschlagkörper kann unverlierbar mit dem Auflagekörper verbunden sein, beispielsweise anhand einer entsprechenden Lagerung beweglich sein, aber auch von dem Auflagekörper entfernbar sein. Es ist möglich, dass der Queranschlagkörper mit dem Auflagekörper in einer einzigen oder mehreren, beispielweise mindestens zwei, Positionen anhand der Anschlagkörper-Fixiermittel lösbar verbindbar sein.

Die Anschlagkörper-Fixiermittel umfassen beispielsweise eine Klemmeinrichtung und/oder eine Schraubeinrichtung und/oder eine Rasteinrichtung. Vorteilhaft ist beispielsweise eine Halteschraube oder Klemmschraube zum Verschrauben des Queranschlagkörpers mit dem Auflagekörper. Die Anschlagkörper-Fixiermittel können aber auch Formschlusskonturen am Auflagekörper und am Queranschlagkörper zu einem formschlüssigen Eingriff ineinander umfassen oder aufweisen.

Der Auflagekörper selbst und/oder der Queranschlagkörper können mehrere, insbesondere mindestens zwei, Queranschlagflächen aufweisen, beispielsweise zueinander winkelige und/oder zueinander beabstandete Queranschlagflächen.

Der Queranschlagkörper ist an dem Auflagekörper vorteilhaft anhand eines Queranschlaglagers beweglich gelagert, wobei das Queranschlaglager ein Schwenklager und/oder ein Schiebelager umfasst. Es ist auch ein kombiniertes Schwenk-Schiebe-Lager ohne weiteres möglich. Zusätzlich ist der Queranschlagkörper bezüglich des Auflagekörpers anhand der Queranschlag-Fixiermittel lösbar befestigbar. So kann der Queranschlagkörper am Auflagekörper entlang bewegt und mit den Queranschlagkörper-Fixiermitteln, beispielsweise Klemmmitteln, Rastmitteln, Schraubmitteln oder dergleichen, fest verbunden werden. Die Beweglichkeit des Queranschlagkörpers relativ zum Auflagekörper ermöglicht die Einstellung einer Vielzahl von Positionen der Queranschlagfläche relativ zu der Basis-Auflagefläche für das Werkstück.

Das Queranschlaglager weist vorteilhaft eine an dem Auflagekörper angeordnete erste Führungskomponente und an dem Queranschlagkörper angeordnete zweite Führungskomponente auf, von denen eine eine Führungsaufnahme ist, in die ein Führungsvorsprung der anderen Führungskomponente eingreift und an der der Führungsvorsprung geführt ist. Die Führungsaufnahme ist beispielsweise als Führungsschlitz, Führungskulisse, Führungskontur oder dergleichen ausgestaltet oder umfasst einen bzw. eine solche. Die Führungsaufnahme kann beispielswiese eine Längsaufnahme oder eine langgestreckte Führungsaufnahme sein, aber auch eine Kurvenform aufweisen.

Mindestens eine Führungskomponente bildet oder umfasst vorteilhaft einen Spannkörper oder Klemmkörper, beispielsweise einen Spannbolzen, der Anschlagkörper-Fixiermittel, wobei der Queranschlagkörper mit dem Auflagekörper anhand des Spannkörpers verspannbar ist. Der Spannkörper ist zwischen einer Lösestellung, in der der Queranschlagkörper relativ zum Anlagekörper verstellbar ist, und einer Fixierstellung oder Spannstellung verstellbar, beispielsweise verschraubbar, in welcher der Queranschlagkörper am Auflagekörper fixiert ist. Eine alternative Formulierung sieht vor, dass die Anschlagkörper-Fixiermittel mindestens einen Spannkörper, beispielsweise einen Spannbolzen, Klemmbolzen oder dergleichen, aufweisen, der in eine Führungsaufnahme in einem Queranschlagkörper oder dem Auflagekörper eingreift oder diese durchsetzt und mit dem der Queranschlagkörper mit dem Auflagekörper verspannbar ist.

Die Führungsaufnahme weist vorteilhaft eine Längsgestalt auf und/oder ist geradlinig. Der Führungsvorsprung ist vorteilhaft entlang einer Schiebeachse oder Längsachse in der Führungsaufnahme längs verschieblich gelagert. Der Führungsvorsprung kann beispielsweise der vorgenannte Spannkörper sein oder durch den Spannkörper gebildet sein.

Der Führungsvorsprung kann an der Führungsaufnahme drehbar gelagert sein. Somit kann die Führungsaufnahme, auch wenn sie eine Längsgestalt hat und/oder geradlinig verläuft, gleichzeitig eine Schwenklageraufnahme bilden. Der Führungsvorsprung, beispielsweise ein Schraubbolzen oder dergleichen, durchsetzt beispielsweise einen Führungsschlitz oder eine Führungsnut, welcher bzw. welche eine Längsgestalt hat.

Die Führungsaufnahme kann sich quer oder parallel zu mindestens einer Queranschlagfläche des Queranschlagkörpers erstrecken. Der Queranschlagkörper kann mehrere Queranschlagflächen aufweisen, beispielsweise mindestens zwei zueinander winkelige Queranschlagflächen. Durch eine Verstellung des Queranschlagkörpers entlang der Führungsaufnahme ist es möglich, die Queranschlagfläche beispielsweise parallel zur Längsachse der Führungsaufnahme oder quer zur Längsachse der Führungsaufnahme zu verstellen.

Die Führungsaufnahme erstreckt sich vorteilhaft zwischen einander entgegengesetzten Queranschlagflächen des Queranschlagkörpers. Die Queranschlagflächen verlaufen vorzugsweise parallel zueinander, während die Führungsaufnahme zu den Queranschlagflächen rechtwinkelig ist. Durch diese Maßnahme ist es möglich, die Queranschlagfläche entlang der Schiebeachse der Führungsaufnahme bezüglich des Auflagekörpers zu verstellen. Eine in der Zeichnung dargestellte Ausführungsform sieht beispielsweise vor, dass sich die Führungsaufnahme parallel zu einer, vorzugsweise zwei einander entgegengesetzten Seiten des Queranschlagkörpers vorgesehenen Queranschlagflächen erstreckt. Zudem verläuft diese Führungsaufnahme zwischen Queranschlagflächen, die die vorgenannten parallel verlaufenden Queranschlagflächen miteinander verbinden.

Die Führungsaufnahme kann zentral oder zentrisch am Queranschlagkörper vorgesehen sein. Aber auch eine asymmetrische Anordnung ist vorteilhaft. So ist es möglich, dass eine Führungsaufnahme beispielsweise zu Queranschlagflächen parallel verläuft, jedoch zu einer Queranschlagfläche einen kleineren Abstand aufweist als zur anderen Queranschlagfläche.

Vorteilhaft ist es, wenn eine Lagerung des Queranschlagkörpers am Auflagekörper und des Auflagekörpers am Trägerkörper zwei oder mehrere voneinander verschiedene Bewegungsfreiheitsgrade vorsieht. Insbesondere ist es vorteilhaft, wenn das Queranschlaglager und das Auflagekörperlager beispielsweise Schiebelager sind, deren Verschiebeachsen oder Schiebeachse zueinander winkelig, beispielsweise rechtwinkelig sind.

Ein Konzept kann vorsehen, dass der Auflagekörper und der Queranschlagkörper bezüglich des Trägerkörpers in der Art eines Kreuzschlittens gelagert und/oder kreisförmig angeordnet oder anordenbar sind.

Eine bevorzugtes Konzept sieht vor, dass die Führungsaufnahme sich zwischen einander entgegengesetzten Seiten des Queranschlagkörpers vorgesehenen Queranschlagflächen erstreckt, wobei die Führungsaufnahme zu der einen Queranschlagfläche einen größeren Abstand als zu der anderen Queranschlagfläche aufweist. Wenn zudem dann noch eine Drehbarkeit des Führungsvorsprungs bezüglich der Führungsaufnahme möglich ist, kann der Queranschlagkörper beispielsweise um 180° gedreht werden, so dass die Queranschlagfläche in der einen Drehposition weiter vor dem Führungsvorsprung vorverstellbar ist als in der anderen Drehposition.

Ein vorteilhaftes Konzept ist es, wenn der Queranschlagkörper bezüglich des Trägerkörpers anhand des Auflagekörpers teleskopierbar in Bezug auf mindestens einen Teleskopachse gelagert ist. Mithin bilden also der Queranschlagkörper und der Auflagekörper Teleskop-Teile eines derartigen Teleskops.

Vorteilhaft ist der Queranschlagkörper bezüglich des Auflagekörpers anhand des Queranschlagkörpers anhand eines Schiebelagers verschieblich und anhand eines Schwenklagers schwenkbar gelagert, wobei diese Lager separate Lager sein können oder durch ein kombiniertes Schwenk-Schiebelager gebildet sein können. Anhand des Schwenklagers können unterschiedliche, insbesondere zueinander winkelige, Queranschlagflächen relativ zu dem Arbeitswerkzeug positioniert werden. Das Schiebelager bildet vorteilhaft einen Bestandteil des vorgenannten Teleskops.

Die Auflagekörper-Fixiermittel und die Anschlagkörper-Fixiermittel können gemeinsame Bestandteile aufweisen. Erfindungsgemäß ist vorgesehen, dass die Auflagekörper-Fixiermittel durch die Anschlagkörper-Fixiermittel ganz oder teilweise gebildet sind.

Mindestens ein Haltekörper und/oder ein Betätigungskörper der Anschlagkörper-Fixiermittel, insbesondere ein Klemmkörper, dient vorteilhaft zum Fixieren des Auflagekörpers bezüglich des Trägerkörpers. Beispielsweise durchsetzt ein Achselement oder Achskörper des Haltekörpers den Auflagekörper. An dem Achskörper kann ein Betätigungskörper oder eine Betätigungshandhabe angeordnet sein.

Bevorzugt ist es, wenn der Auflagekörper sandwichartig zwischen dem Trägerkörper und dem Queranschlagkörper verklemmbar ist. Wenn also der Queranschlagkörper bezüglich des Trägerkörpers fixiert wird, verklemmt er gleichzeitig den Auflagekörper mit dem Trägerkörper.

Eine Breite des Queranschlagkörpers ist vorteilhaft kleiner als eine Breite des Auflagekörpers.

Ferner ist eine Länge des Queranschlagkörpers ist vorteilhaft kleiner als eine Länge des Auflagekörpers.

Mithin ist es also möglich, dass der Queranschlagkörper dadurch in eine Lage gebracht wird, bei der er nicht vor den Auflagekörper vorsteht. An dieser Stelle sei aber bemerkt, dass der Queranschlagkörper auch die gleiche Umfangsgeometrie wie der Auflagekörper aufweisen kann.

Vorzugsweise ist vorgesehen, dass die Zusatz-Auflagefläche des Auflagekörpers an mindestens einer Seite, vorzugsweise an einander entgegengesetzten Seiten, im Sinne einer Vergrößerung einer durch die Basis-Auflagefläche und die Zusatz-Auflagefläche gebildeten Gesamt-Auflagefläche vor den Trägerkörper seitlich vorsteht. Mithin bildet der Trägerkörper sozusagen die Grundlage für den Auflagekörper, der dann seitlich an einer oder mehreren Seiten vor dem Trägerkörper vorsteht und eine besonders große Basis-Auflagefläche bereitstellt.

An dieser Stelle sei noch erwähnt, dass auch der Queranschlagkörper vor dem Auflagekörper vorstehen kann, beispielsweise in einer oder mehreren Relativpositionen des Queranschlagkörpers zum Auflagekörper.

Bevorzugt ist es, wenn die Stützzusatzeinrichtung anhand der Trägerkörper-Befestigungsmittel in einer Transportstellung einer Gebrauchsstellung an der Werkstückauflageeinrichtung anordenbar, beispielsweise befestigbar, ist. Ein Tragabschnitt des Trägerkörpers zum Tragen des Auflagekörpers steht in der Gebrauchsstellung weiter vor die Werkstückauflageeinrichtung vor als in der Transportstellung. Somit stört die Stützzusatzeinrichtung in der Transportstellung nicht oder jedenfalls weniger.

Die Trägerkörper-Befestigungsmittel weisen vorteilhaft mindestens eine Lagerkomponente, beispielsweise eine Führungskulisse und/oder eine Lageraufnahme, eines Transportlagers auf, anhand dessen der Trägerkörper bezüglich der Werkstückauflageeinrichtung zwischen der Transportstellung und der Gebrauchsstellung beweglich gelagert ist. Das Transportlager weist beispielsweise eine Schiebelager und/oder eine Schwenklager auf. Somit kann die Stützzusatzeinrichtung bezüglich der Werkstückauflageeinrichtung, insbesondere des Werkstückauflagekörpers, geschwenkt und/oder verschoben werden, um die Transportstellung oder die Gebrauchsstellung zu erreichen. An dieser Stelle sei noch erwähnt, dass auch eine lösbare Befestigung des Trägerkörpers von der Werkstückauflageeinrichtung mindestens zwei Montagepositionen vorsehen kann, nämlich eine der Transportstellung und eine der Gebrauchsstellung zugeordnete Montageposition. Mithin muss also nicht zwingend ein Transportlager vorgesehen sein.

Wie schon im Zusammenhang mit dem Queranschlaglager erläutert, können Lagerkomponenten eines Lagers, beispielsweise des Transportlagers, gleichzeitig eine Spannfunktion, Haltefunktion oder dergleichen aufweisen. So kann das Transportlager beispielsweise eine Führungsaufnahme oder Führungskulisse aufweisen, die von einem Befestigungsbolzen oder Spannkörper durchsetzt ist. Der Befestigungsbolzen oder Befestigungskörper ist mit der Werkstückauflageeinrichtung lösbar verbindbar, beispielsweise in diese einschraubbar, mit dieser verklemmbar oder dergleichen. So kann beispielsweise eine Klemmschraube gleichzeitig einen Kulissenfolger oder einen Führungsvorsprung bilden, der in eine Führungsaufnahme des Transportlagers eingreift. Weiterhin kann das Transportlager eine Bohrung oder sonstige Schwenklageröffnung aufweisen, die von einem Schwenklagerkörper durchsetzt ist, der mit der Werkstückauflageeinrichtung verbunden ist, beispielsweise in diese eingeschraubt ist.

Mindestens eine Komponente der Stützzusatzeinrichtung, beispielsweise der Queranschlagkörper, bildet vorteilhaft eine Fixiereinrichtung zum Fixieren mindestens einer Komponente der Werkstückauflageeinrichtung in einer zum Transportieren geeigneten Position an dem Werkstückauflagekörper. Die Stützzusatzeinrichtung, beispielsweise der Queranschlagkörper, der Auflagekörper oder dergleichen, bildet also zusätzlich einen Halter oder eine Haltekomponente, um ein Bauteil oder eine Komponente der Werkstückauflageeinrichtung bezüglich des Werkstückauflagekörpers zu fixieren. Diese mindestens eine Komponente kann beispielsweise eine Stütze, insbesondere eine Teleskopstütze, eine Schwenkstütze, ein Stützfuß oder dergleichen zum Abstützen des Werkstückauflagekörpers sein, welche von der Komponente der Stützzusatzeinrichtung, beispielsweise dem Queranschlagkörper, in einer an dem Werkstückauflagekörper anliegenden Position fixiert oder fixierbar ist. So kann beispielsweise die Komponente der Stützzusatzeinrichtung zum Werkstückauflagekörper hin verschwenkt sein, wobei sie in dieser Position dann von der Stützzusatzeinrichtung fixierbar ist.

Das Auflagekörperlager weist vorteilhaft zwei zu einer Schiebeachse des Auflagekörpers parallel verlaufende und quer zur Schiebeachse beabstandete Führungsaufnahmen, beispielsweise Führungsnuten, Schwalbenschwanznuten oder dergleichen, auf, in denen Führungsvorsprünge parallel zur Schiebeachse geführt sind. Dabei ist es möglich, dass beide Führungsaufnahmen am Auflagekörper und beide Führungsvorsprünge am Queranschlagkörper vorhanden sind. Es ist aber auch möglich, dass die Führungsaufnahmen am Auflagekörper und die Führungsvorsprünge am Trägerkörper angeordnet sind. Weiterhin ist es möglich, dass der Auflagekörper nur eine Führungsaufnahme und nur einen Führungsvorsprung aufweist, die zum Eingriff mit einem Führungsvorsprung bzw. einer Führungsaufnahme des Trägerkörpers vorgesehen sind.

Die Paarungen von Führungsaufnahme und Führungsvorsprung sind vorteilhaft an einander entgegengesetzten Längsseitenbereichen, insbesondere an längeren Seitenbereichen und/oder an Randbereichen des Trägerkörpers angeordnet. Somit stützt der Trägerkörper oder führt der Trägerkörper den Auflagekörper möglichst weit außen.

Die Auflagekörper-Fixiermittel weisen vorteilhaft mindestens einen Klemmkörper auf, der mit einer der Führungsaufnahmen verklemmbar ist. Der Klemmkörper ist beispielsweise als Kulissenfolger oder Führungsvorsprung in der Führungsaufnahme angeordnet.

Weiterhin ist es vorteilhaft, wenn die Auflagekörper-Fixiermittel mindestens eine Hintergreifkontur, beispielsweise eine Hakenkontur oder dergleichen, aufweisen, die in einen Hintergriff mit einer der Führungsaufnahmen bringbar ist, so dass der Auflagekörper allseitig quer zu der Schiebeachse an der Führungsaufnahme gehalten ist. Mithin kann also der Auflagekörper entlang der Führungsaufnahme bzw. der Linearachse verschoben werden, quer dazu aber nicht mehr von der Führungsaufnahme entfernt werden.

Die Auflagekörper-Fixiermittel weisen vorteilhaft für jede der Führungsaufnahmen jeweils einen Klemmkörper und/oder jeweils eine Hintergreifkontur auf.

An dieser Stelle sei erwähnt, dass der Klemmkörper integral die Hintergreifkontur aufweisen kann. Der Klemmkörper kann einziger Klemmkörper sein, welcher in beide der Führungsaufnahmen eingreift, weiterhin kann der Klemmkörper als Hintergreifkontur in beide der Führungsaufnahmen eingreifen. Die Hintergreifkonturen sind vorteilhaft voneinander abgewandt und/oder spreizfußartig.

Eine Führungsaufnahme kann beispielsweise einen zu einer Nut oder einem Schlitz vorstehenden Abschnitt als eine Hintergreifkontur aufweisen, der von dem Hintergreifkörper oder der Hintergreifkontur hintergriffen wird.

An dem Auflagekörper kann ein Führungsvorsprung oder können mehrere Führungsvorsprünge vorgesehen sein, die in die Führungsaufnahme eingreifen. Beispielsweise haben die Führungsvorsprünge in Bezug auf die Längsachse oder Schiebeachse der Führungsaufnahme einen Abstand. Bevorzugt sind die Führungsvorsprünge an einander entgegengesetzten Seiten des Auflagekörpers vorgesehen.

Der Trägerkörper und/oder der Werkstückauflagekörper sind vorteilhaft als Profilkörper ausgestaltet oder als ein Strangpress-Profil.

Beispielsweise bei der Ausgestaltung als Profilkörper oder Strangpress-Profil ist die nachfolgende Maßnahme vorteilhaft realisierbar:
Vorteilhaft weisen der Trägerkörper und/oder der Werkstückauflagekörper eine Führungsaufnahme mit einer Haltekontur, beispielsweise einen vorstehenden Abschnitt zum Hintergreifen durch eine Hintergreifkontur und/oder eine Nutenstein auf. Mithin ist also die Führungsaufnahme gleichzeitig eine Halteaufnahme. Die Führungsaufnahme kann gleichzeitig eine Klemmaufnahme bilden, mit der ein Klemmkörper verklemmbar ist.

Der Auflagekörper, der Trägerkörper und der Queranschlagkörper können beispielsweise plattenartig sein. Vorteilhaft ist es, wenn der Auflagekörper und der Queranschlagkörper aus Kunststoff besteht, während der Trägerkörper aus Metall besteht.

Die Stützzusatzeinrichtung ist vorteilhaft zu einer Montage an einer Längsseite, beispielsweise an einer Längsschmalseite oder einer längeren Seite, der Werkstückauflageeinrichtung vorgesehen und/oder ausgestaltet. Die Längsschmalseite ist beispielsweise an dem Werkstückauflagekörper vorgesehen. Die Längsseite verläuft entlang einer Längserstreckung der Werkstückauflageeinrichtung und ist länger als eine Querseite, beispielsweise eine Längsendseite, der Werkstückauflageeinrichtung.

Der Trägerkörper und/oder Auflagekörper und/oder der Queranschlagkörper weisen vorteilhaft mindestens eine Durchtrittsöffnung für eine Schraube auf, die durch den Auflagekörper oder Queranschlagkörper hindurch in ein Werkstück einschraubbar ist. Eine Mündung der Durchtrittsöffnung für die Schraube ist beispielsweise an der Zusatz-Auflagefläche des Auflagekörpers oder einer Queranschlagfläche des Queranschlagkörpers vorgesehen. Die Durchtrittsöffnung erstreckt sich beispielsweise von der jeweiligen Auflagefläche oder Anschlagfläche zu einer zu der Auflagefläche oder Anschlagfläche entgegengesetzten Seite des Auflagekörpers oder Queranschlagkörpers. Ein optionales Ausführungsbeispiel sieht vor, der Auflagekörper mindestens zwei Durchtrittsöffnungen für Schrauben aufweist, wobei vorteilhaft das Auflagekörperlager zwischen diesen Durchtrittsöffnungen angeordnet ist.

Der Trägerkörper und/oder Auflagekörper und/oder der Queranschlagkörper weisen vorteilhaft mindestens eine Halteaufnahme für einen an dem Werkstück oder einer Abstützung für das Werkstück eingeschraubten Haltekörper, insbesondere für einen Schraubenkopf, auf.

Der Auflagekörper und/oder der Queranschlagkörper sind vorzugsweise von dem Trägerkörper lösbare Komponenten.

Vorteilhaft können die Anschlagkörper-Fixiermittel und/oder die Auflagekörper-Fixiermittel eine Klemmeinrichtung, eine Rasteinrichtung, eine Schraubeinrichtung oder dergleichen umfassen. Wenn derartige Fixiermittel gelöst sind, können der Auflagekörper und/oder der Queranschlagkörper vom Trägerkörper entfernt werden. Insbesondere ist es möglich, dass ein Stützkörper zum Abstützen eines Werkstücks mit beispielsweise dem Queranschlagkörper und/oder dem Auflagekörper verbunden wird, insbesondere verschraubt wird, wofür beispielsweise die oben genannte Halteaufnahme und/oder Durchtrittsöffnung geeignet sind. Der Stützkörper ist beispielsweise ein sogenanntes Opferbrett oder eine sonstiges Holzelement, das gegebenenfalls auch durchsägt werden kann.

Vorteilhaft ist ferner, wenn die Stützzusatzeinrichtung einen Queranschlagkörper oder eine Schablone zur Herstellung eines Queranschlagkörpers aufweist, der eine an eine Außenumfangskontur, beispielsweise eine Seitenkontur oder eine Front-Kontur, der Werkzeugmaschine angepasste Umfangskontur aufweist.. Die Außenumfangskontur weist des Queranschlagkörpers beispielsweise eine Vertiefung, eine Rundung oder dergleichen auf, sodass der Queranschlagkörper beispielsweise nicht oder nur unwesentlich vor eine Frontseite der Werkzeugmaschine vorsteht. Beispielsweise ist der Queranschlagkörper an eine Umfangskontur eines Sägetisches oder Bearbeitungstisches der Werkzeugmaschine angepasst. Der Queranschlagkörper weist eine insbesondere langgestreckte Gestalt auf. Der Queranschlagkörper weist eine oder mehrere Queranschlagflächen auf, die in Gebrauchslage winkelig, insbesondere rechtwinkelig, zu der Basis-Auflagefläche und/oder Zusatz-Auflagefläche ist. Vorteilhaft ist es, wenn die an die Werkzeugmaschine angepasste Umfangskontur und die Queranschlagfläche an einander entgegengesetzten Seiten, insbesondere Längsseiten, des Queranschlagkörpers vorgesehen sind.

Der Queranschlagkörper kann in Verbindung mit dem Merkmal der angepassten Umfangskontur oder auch ohne angepasste Umfangskontur, zum Beispiel mit einer geraden, nicht bogenförmigen Umfangskontur oder dergleichen, zur Verbindung der Stützzusatzeinrichtung mit einer weiteren Stützzusatzeinrichtung vorgesehen sein, die beispielsweise gleich wie die Stützzusatzeinrichtung ausgestaltet ist. Der Queranschlagkörper erstreckt sich also beispielsweise von der einen Stützzusatzeinrichtung zur anderen Stützzusatzeinrichtung

Die Werkzeugmaschine und/oder die Werkstückauflageeinrichtung weisen vorteilhaft mindestens einen Queranschlag oder eine Queranschlagfläche auf. Die mindestens eine Queranschlagfläche der Stützzusatzeinrichtung kann vorteilhaft in eine der Queranschlagfläche der Werkzeugmaschine oder der Werkstückauflageeinrichtung gegenüberliegende Position verstellbar sein.

Bevorzugt ist eine Konfiguration derart, dass zwei erfindungsgemäße Stützzusatzeinrichtungen vorgesehen sind, deren Queranschlagkörper und/oder Auflagekörper vom Trägerkörper entfernbar ist. Ein Stützzusatzeinrichtung, beispielsweise eine Holzleiste oder ein sonstiges langgestrecktes Holzelement, kann mit dem Queranschlagkörper und/oder dem Auflagekörper verbunden werden, beispielsweise verschraubt, verhakt oder dergleichen. Ein langgestreckter Stützkörper, beispielsweise die vorgenannte Holzleiste, kann sozusagen ein Verbindungsglied zwischen zwei Auflagekörpern und/oder zwei Queranschlagkörpern zweier Stützzusatzeinrichtungen bilden. Die Auflagekörper oder Queranschlagkörper können im mit dem Stützkörper verbundenen Zustand vom Trägerkörper entfernt werden und bei Bedarf wieder am Trägerkörper lösbar montiert werden.

Eine Unterseite der Werkstückauflageeinrichtung dient vorteilhaft zur Befestigung des Trägerkörpers. Es versteht sich, dass die gesamte Unterseite der Werkstückauflageeinrichtung in derselben Ebene sein kann oder eine Planfläche sein kann. Es ist aber auch möglich, dass die Werkstückauflageeinrichtung eine beispielsweise stufige oder jedenfalls nicht ebene Gesamt-Unterseite aufweist, deren Randbereich die zur Befestigung des Trägerkörpers vorgesehene Unterseite ist.

Vorteilhaft ist es, wenn der Trägerkörper eine Auflagefläche zum Auflegen des Auflagekörpers aufweist, die dann, wenn der Trägerkörper an der Werkstückauflageeinrichtung montiert ist, beispielsweise an diese angeschraubt oder mit dieser verklemmt ist, mit der zur Befestigung des Trägerkörpers vorgesehene Unterseite der Werkstückauflageeinrichtung fluchtet und/oder an dieser Unterseite flächig oder zumindest im Wesentlichen flächig anliegt. Die Unterseite der Werkstückauflageeinrichtung und die Auflagefläche des Trägerkörpers für den Auflagekörper liegen vorteilhaft in einer gemeinsamen Ebene.

Beispielsweise ist es möglich, dass der Trägerkörper in seinem an der Werkstückauflageeinrichtung montierten Zustand in der Art eines Tablars oder einer seitlich vorstehenden Stütze vor die Werkstückauflageeinrichtung vorsteht. Dabei ist es möglich, dass eine Auflagefläche des Trägerkörpers für den Auflagekörper mit der Unterseite der Werkstückauflageeinrichtung fluchtet oder in einer Ebene liegt, aber auch dass die Auflagefläche des Trägerkörpers oberhalb oder unterhalb der Ebene der Unterseite der Werkstückauflageeinrichtung liegt.

Die Werkstückauflageeinrichtung und der Auflagekörper haben zweckmäßigerweise die gleiche oder etwa die gleiche Höhe und/oder denselben Abstand zwischen ihrer zur Auflage eines Werkstücks vorgesehenen Oberseite und einer dieser entgegengesetzten Unterseite, zumindest dort, wo der Auflagekörper neben der Werkstückauflageeinrichtung im montierten Zustand angeordnet ist. So ist beispielsweise ein Randbereich der Werkstückauflageeinrichtung gleich hoch wie der Auflagekörper.

Vorteilhaft ist vorgesehen, dass ein Abstand zwischen der Zusatz-Auflagefläche und einer Unterseite des Auflagekörpers gleich oder im Wesentlichen gleich ist wie ein Abstand zwischen der Basis-Auflagefläche der Werkstückauflageeinrichtung und einer zur Befestigung des Trägerkörpers vorgesehenen Unterseite der Werkstückauflageeinrichtung, beispielsweise eines Randbereich der Werkstückauflageeinrichtung.

Nachfolgend wird ein Ausführungsbeispiel der Erfindung anhand der Zeichnung erläutert. Es zeigen:
- Figur 1: eine perspektivische Schrägansicht, einer halbstationären Werkzeugmaschine mit angebauten Werkstückauflageeinrichtungen, die an einem Gestell angeordnet sind, sowie eine Stützzusatzeinrichtung,
- Figur 2: ein Detail D1 aus Figur 1 mit vergrößerter Ansicht der Stützzusatzeinrichtung,
- Figur 3: die Anordnung gemäß Figur 1, jedoch ohne Gestell,
- Figur 3B: einen mit der Anordnung gemäß Figur 3 verwendeten oder verwendbaren Queranschlagkörper,
- Figur 3C: eine Schablone zur Herstellung des Queranschlagkörpers gemäß Figur 3B,
- Figur 4: eine die Anordnung gemäß Figur 1 mit nur einer Werkstückauflageeinrichtung,
- Figur 5: ein Detail D2 aus Figur 4,
- Figur 6: eine perspektivische Schrägdarstellung einer Werkstückauflageeinrichtung mit einer Stützzusatzeinrichtung,
- Figur 7: einen Schnitt durch die Anordnung gemäß Figur 6, etwa entlang einer Schnittlinie A-A in Figur 6,

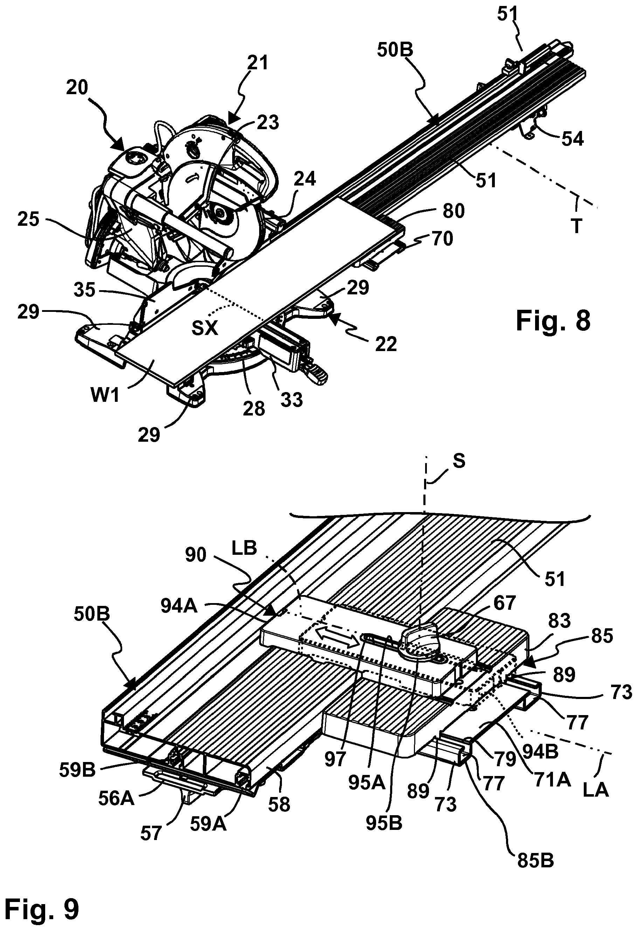

- Figur 8: eine Konfiguration ähnlich wie in Figur 3, wobei jedoch ein Werkstück flach auf die Stützzusatzeinrichtung aufgelegt ist,
- Figur 9: eine Teilansicht der Werkstückauflageeinrichtung gemäß Figur 6, etwa entsprechend einem Ausschnitt D3 in Figur 6,
- Figur 10: eine Draufsicht auf die Stützzusatzeinrichtung gemäß der Erfindung, von der in
- Figur 11: ein Querschnitt entlang einer Schnittlinie B-B in Figur 10 und in
- Figur 12: ein Querschnitt entlang einer Schnittlinie C-C in Figur 10 dargestellt sind,
- Figur 13: eine untere Ansicht der Werkstückauflageeinrichtung sowie der Stützzusatzeinrichtung, die in eine Transportstellung verstellt ist, und
- Figur 14: eine untere Ansicht auf die Werkstückauflageeinrichtung sowie die Stützzusatzeinrichtung, etwa entsprechend dem Ausschnitt gemäß Figur 9.

Eine halbstationäre Werkzeugmaschine 20 ist beispielsweise als eine Sägemaschine ausgestaltet. Die Werkzeugmaschine 20 weist ein Sägeaggregat 21 auf, welches an einer Maschinenbasis 22 beweglich gelagert ist. Das Sägeaggregat 21 kann um eine oder mehrere Schwenkachsen bezüglich der Maschinenbasis 22 geschwenkt werden, beispielsweise um Schwenkachsen S1 und/oder S2 und/oder S3.

Das Sägeaggregat 21 weist einen Antriebsmotor 23, insbesondere einen elektrischen Antriebsmotor auf, mit dem eine Werkzeugaufnahme und somit ein Arbeitswerkzeug 24, beispielsweise ein Sägeblatt, antreibbar ist.

Das Arbeitswerkzeug 24, vorzugsweise das Sägeaggregat 21, ist bezüglich der Maschinenbasis 22 vorzugsweise entlang einer Linearachse L verschieblich gelagert, so dass die Sägemaschine oder Werkzeugmaschine 20 als eine Zugsäge einsetzbar ist. Beispielsweise sind zur Verstellung des Sägeaggregates 21 Längsführungen 26, beispielsweise an langgestreckten Tragkörpern, Rohren oder dergleichen, vorgesehen, an denen das Sägeaggregat 21 entlang der Linearachse L verschieblich gelagert ist.

Zudem kann das Arbeitswerkzeug 24, mithin also das Sägeblatt, um die Schwenkachse S1, die somit eine Tiefeneinstellachse S1 bildet, in Richtung einer Werkstückauflagefläche 31 eines Bearbeitungstisches 30, der an der Maschinenbasis 22 vorgesehen ist, geschwenkt werden, um ein auf der Werkstückauflagefläche 31 aufliegendes Werkstück W1 oder W2 zu durchtrennen.

Weiterhin kann das Sägeaggregat 21 anhand eines Schrägstelllagers 27 um die Schwenkachse S2, die vorliegend eine Schrägstellachse S2 bildet, geschwenkt werden. Die Schrägstellachse S2 und die Linearachse L verlaufen parallel zueinander. Das Schrägstelllager 27 ist beispielsweise an der Maschinenbasis 22, insbesondere an einem vor dieses vorstehenden Turm oder Träger angeordnet.

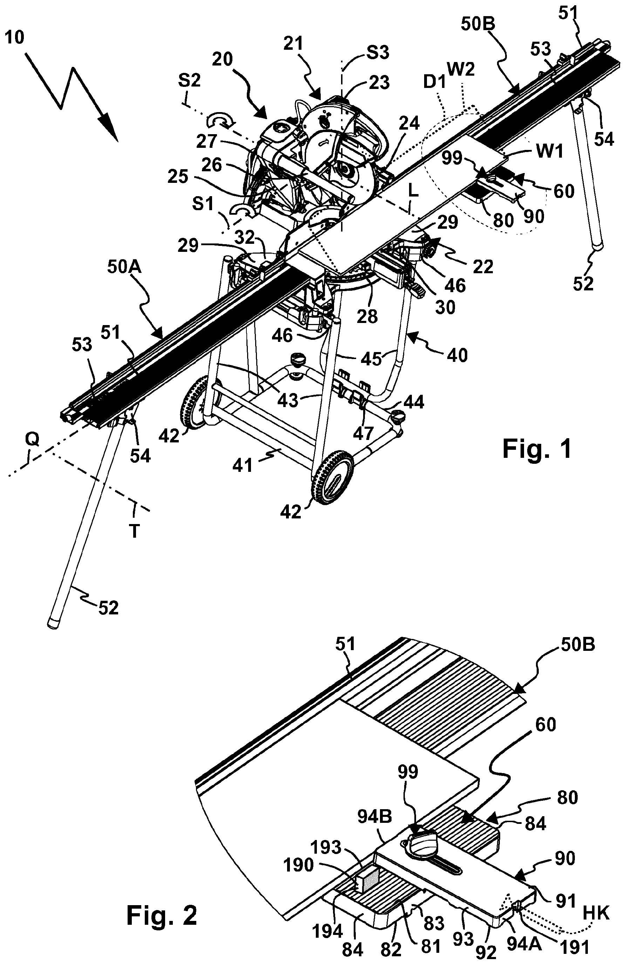

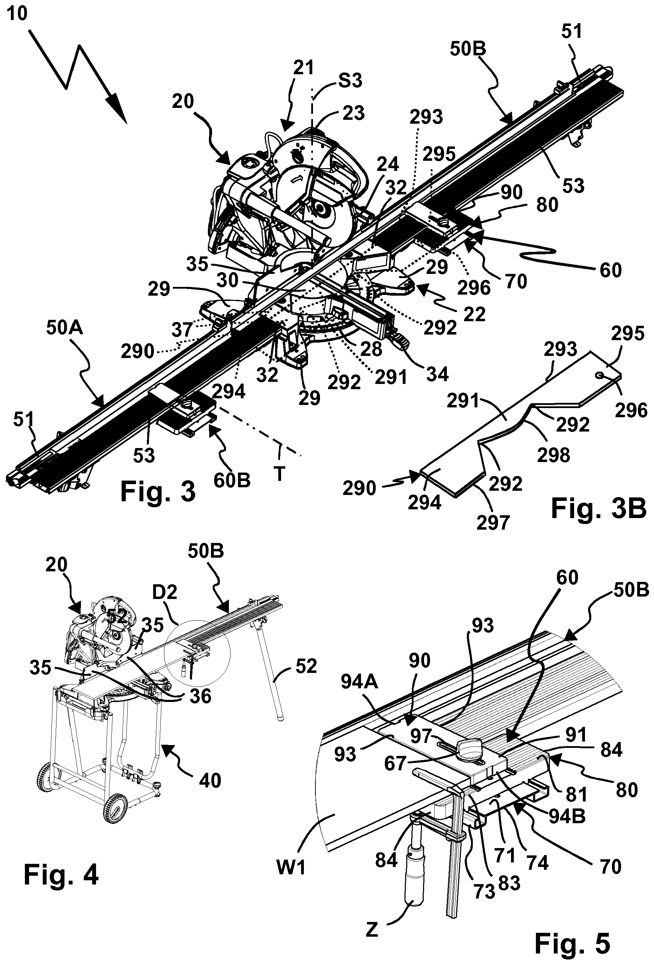

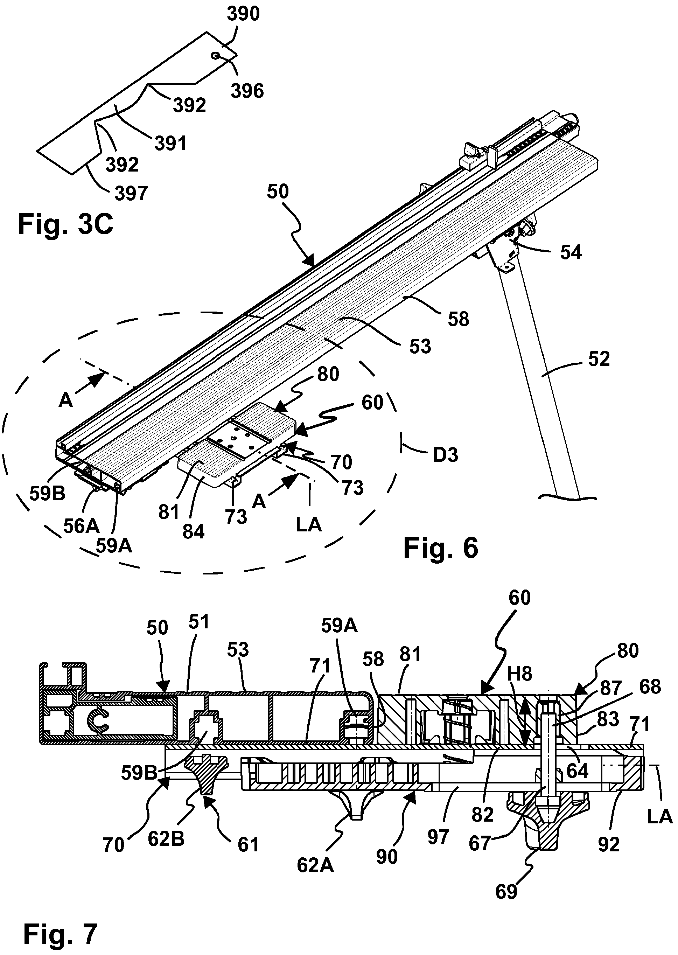

Der Bearbeitungstisch 30 ist um die Schwenkachse S3, die eine Gehrungsachse S3 bildet, an einem Grundträger 28 der Maschinenbasis 22, der beispielsweise auf einem Untergrund abgestellt werden kann, siehe beispielsweise Figur 3, oder an einem Gestell 40 angeordnet werden kann (Figur 1), um die Gehrungsachse S3 schwenkbar gelagert.

Die Gehrungsachse S3, die Schrägstellachse S2 sowie die Tiefeneinstellachse S1 verlaufen rechtwinkelig zueinander. Durch ein Schwenken des Sägeaggregates 21 um die Tiefeneinstellachse S2 ist ein sogenannter Kappschnitt in das Werkstück W1, W2 einbringbar, so dass man die Sägemaschine 20 auch als eine Kappsäge bezeichnen kann. Durch die zusätzliche Verstellbarkeit des Sägeaggregates 21 entlang der Linearachse L ist sie zudem noch eine Zugsäge. Mithin ist also eine kombinierte Zug-Kapp-Sägemaschine in der Zeichnung dargestellt.

Bei Gebrauch der Werkzeugmaschine 20 verläuft die Gehrungsachse S3 vertikal oder im Wesentlichen vertikal, während die Tiefeneinstellachse S1 sowie die Schrägstellachse S2 horizontale oder im Wesentlichen horizontale Achsen sind.

An einer Gestellbasis 41 des Gestells 40 sind Räder 42 angeordnet, so dass dieses auf einem Untergrund rollbar ist. Von der Gestellbasis 41 stehen Stützen 43 sowie ein Abstellvorsprung 44 zum Abstellen auf dem Untergrund ab. Am Abstellvorsprung 44 ist weiterhin ein Stützrahmen 45 anhand eines Lagers 47 abgestützt. Das Lager 47 kann eine feste Abstützung vorsehen, aber auch eine lösbare Befestigung des Stützrahmens 45 am Abstellvorsprung 44. Der Abstellvorsprung 44 und die Stützen 43 sind etwa rechtwinkelig zueinander. Das Gestell 40 kann auf den Rädern 42 sowie dem Abstellvorsprung 44 auf einem Untergrund abgestellt werden. An den freien Endbereichen der Stützen 43 sowie des Stützrahmens 45 sind Befestigungsmittel 46 zur Befestigung der Werkzeugmaschine 20 vorgesehen. Beispielsweise sind die Befestigungsmittel 46, bei denen es sich um Schrauben, Klemmen oder dergleichen andere Halterungen handeln kann, mit Seitenstützen 29 der Maschinenbasis 22, insbesondere des Grundträgers 28, lösbar verbindbar.

Insgesamt ermöglicht die auf dem Gestell 40 abgestellte Werkzeugmaschine 20 ein bequemes Arbeiten. Beispielsweise befindet sich die Werkstückauflagefläche 31 etwa in Hüfthöhe eines Bedieners.

An den Seitenstützen 29 sind Seitenauflageflächen 32 vorgesehen, die mit der sozusagen eine Haupt-Werkstückauflagefläche bildenden Werkstückauflagefläche 31 des Bearbeitungstisches 30 fluchten oder allenfalls einen geringen Höhenversatz aufweisen. Somit können die Werkstücke W1 und W2 auf die Werkstückauflagefläche 31 und zugleich auf die Seitenauflageflächen 32 aufgelegt werden.

Der Bearbeitungstisch 30 ist etwa zentral zwischen vier der Seitenstützen 29 angeordnet.

Der Bearbeitungstisch 30 ist um die Gehrungsachse S3 bezüglich des Grundträgers 28 schwenkbar.

Zur Handhabung, insbesondere Schwenkbetätigung, des Bearbeitungsstückes 30 ist ein Bedienarm oder Bedienvorsprung 33 vorgesehen, der vor den Bearbeitungstisch 30 vorsteht. Der Bedienvorsprung 33 kann von einem Bediener ergriffen werden, um den Bearbeitungstisch 30 als Ganzes und somit das an dem Bearbeitungstisch 30 angeordnete Sägeaggregat 21 um die Gehrungsachse S2 zu schwenken. Die eingestellte Gehrungsposition kann anhand einer Halteeinrichtung 34, beispielsweise einer Klemmeinrichtung und/oder Rasteinrichtung, festgelegt werden. Von der Halteeinrichtung 34 ist in der Zeichnung lediglich ein Betätigungselement am Bedienvorsprung 33 mit dem Bezugszeichen 34 bezeichnet.

Mithin ermöglicht also die Werkzeugmaschine 20 eine hochflexible Einstellung der jeweiligen Position des Werkzeugs 24 oder Sägeblattes bezüglich der Werkstückauflagefläche 31, um die Werkstücke W1, W2 oder weitere, nicht näher erläuterte Werkstücke zu bearbeiten, insbesondere zu sägen.

An dieser Stelle sei nur exemplarisch erwähnt, dass die Verstellbarkeiten der Werkzeugmaschine 20 sich selbstverständlich auch für andere Bearbeitungsmethoden eignen, beispielsweise für eine Fräsbearbeitung, Bohrbearbeitung oder dergleichen. Jedenfalls ist die Werkzeugmaschine 20 eine halbstationäre Werkzeugmaschine, die an eine Baustelle mitgenommen und dort vor Ort aufgebaut werden kann, nämlich direkt auf dem Untergrund abgestellt oder mit dem Gestell 40 ergonomisch günstig platziert werden kann.

Bei beiden Betriebsweisen, nämlich mit und ohne Gestell 40, sind Werkstückauflageeinrichtungen 50, beispielsweise Werkstückauflageeinrichtungen 50A und 50B entsprechend Figur 1 oder nur eine der beiden Werkstückauflageeinrichtungen 50A oder 50B (Figur 7), bei der Bearbeitung der Werkstücke W1, W2 günstig.

Die Werkstückauflageeinrichtungen 50A, 50B verlängern die Werkstückauflagefläche 31 des Bearbeitungstisches 30 bezüglich einer Längsachse Q, die sich quer zur Linearachse L erstreckt. Die Längsachse Q ist zudem parallel zu einer Drehachse des Werkzeuges 24 bzw. der durch den Antriebsmotor 23 angetriebenen Werkzeugaufnahme. Die Längsachse Q verläuft also quer zu einer Arbeitsrichtung des Werkzeugs 24 bei einer Bearbeitung des Werkstückes W1, W2, wenn dieses beispielsweise entlang der Linearachse L verstellt wird und/oder einen Sägeschnitt SX in das Werkstück W1 oder W2 einbringt. Weiterhin ist die Längsachse Q parallel zur Tiefeneinstellachse S1.

Durch die Verlängerung oder Verbreiterung der Werkstückauflagefläche 31 nicht nur durch die Seitenauflageflächen 32, sondern auch durch die Werkstückauflageeinrichtung 50 in Bezug auf die Längsachse Q können langgestreckte Werkstücke W1, W2 auf der Werkstückauflagefläche 31 sowie der Werkstückauflageeinrichtung 50 aufgelegt und durch das System 10, welches die Werkzeugmaschine 50 und eines oder beide der Werkstückauflageeinrichtungen 50 umfasst, bequem und effektiv bearbeitet werden.

Die Werkstückauflageeinrichtungen 50A, 50B weisen jeweils einen Werkstückauflagekörper 51 auf, an dessen beim Betrieb oberen Seite eine Basis-Auflagefläche 53 zum Auflegen des Werkstücks W1, W2 vorgesehen ist. Die Basis-Auflagefläche 53 fluchtet dann, wenn die Werkstückauflageeinrichtungen 50 an der Werkzeugmaschine 20, insbesondere dem Grundträger 28, befestigt sind, mit der Werkstückauflagefläche 31 des Bearbeitungstisches 30 sowie den Seitenauflageflächen 32.

Die Werkstückauflageeinrichtung 50 weist zudem Stützen 52 auf, die in der in Figur 1 dargestellten Position die Werkstückauflagekörper 51 im Bereich ihrer von der Maschinenbasis 22 oder der Werkzeugmaschine 20 als Ganzes entfernten Längsendbereiche abstützen. Eine Länge der Stützen 52 ist so bemessen, dass sie etwa der Länge der Stützen 43 entspricht. Die Stützen 52 können teleskopierbar sein. Die Stützen 52 sind an Lagern 54, insbesondere Schwenklagern, schwenkbar bezüglich der Werkstückauflagekörper 51 gelagert, so dass sie aus der in Figur 1 dargestellten Gebrauchsstellung in eine Transportstellung, bei der sie an einer Unterseite 55 der Werkstückauflagekörper 51 anliegen, beweglich gelagert sind. Die Stützen 52 können beispielsweise um eine Schwenkachse SX des jeweiligen Lagers 54 schwenken.

An zur Verbindung mit der Werkzeugmaschine 20 vorgesehenen Längsendbereichen der Werkstückauflagekörper 51 sind Befestigungsmittel zur Befestigung mit der Werkzeugmaschine 20 vorgesehen, beispielsweise Formschlusskonturen, Klemmmittel oder dergleichen. So sind beispielsweise Haltekonturen 56, insbesondere zueinander winkelige Haltekonturen 56 an dem Werkstückauflagekörper 51, insbesondere dessen Unterseite, vorgesehen, die in Eingriff mit Haltekonturen 37 der Maschinenbasis 22 gebracht werden können. Die Haltekonturen 56 sind formschlüssig komplementär zu den Haltekonturen 37. Die Haltekonturen 56 sind an einem Haltekörper 56A angeordnet. Der Haltekörper 56A kann beispielsweise anhand einer Klemmschraube 57 zwischen einer Lösestellung und einer Klemmstellung verstellbar sein. In der Lösestellung können die Haltekonturen 37, 56 außer Eingriff gebracht werden, während sie in der Klemmstellung miteinander verklemmt sind und formschlüssig ineinander eingreifen.

Somit sind jedenfalls die Werkstückauflageeinrichtungen 50A, 50B fest mit der Werkzeugmaschine 20, insbesondere der Maschinenbasis 22 verbindbar, so dass die Basis-Auflagefläche 53 bezüglich der Werkstückauflagefläche 31 in Lage gehalten ist.

Die Werkstückauflageeinrichtung 50 weist eine relativ schmale, sich entlang der Längsachse Q erstreckende Basis-Auflagefläche 53 auf, die sich quer zur Längsachse Q in einer Tiefenrichtung T nur wenig ausdehnt, also schmal entlang der Längsachse Q verläuft. Wenn also ein Werkstück in der Art beispielsweise des Werkstücks W1 auf die Basis-Auflagefläche 53 aufzulegen ist, steht dieses beispielsweise an einem Vertikalanschlag oder Queranschlag 35 der Werkzeugmaschine 20 an und steht an einer von dem Queranschlag 35, insbesondere dessen Queranschlagfläche 36, entfernten Seite vor dem Werkstückauflagekörper 51 vor, also in Bezug auf die Längsachse oder Linearachse L. Mithin ist also das Werkstück W1 zwar im Wesentlichen von dem Werkstückauflagekörper 51 abgestützt, im Bereich des Bedienvorsprungs 33 des Bearbeitungstisches 30 jedoch nur durch den Bearbeitungstisch 30. Das Arbeitswerkzeug 24 liegt dem Bearbeitungstisch 30 und dem Bedienvorsprung 33 gegenüber, so dass dort eine an sich ausreichende Abstützung des Werkstücks W1, W2 gegeben ist. Allerdings kann sich das Werkstück W1, W2 verwinden, wenn es wie beispielsweise in Fig. 1 dargestellt abseits oder neben dem Bearbeitungstisch 30 nicht in Bezug auf die Linearachse L in vollständigem Maße abgestützt ist, z.B. vor die Werkstückauflageeinrichtungen 50A und 50B in der Tiefenrichtung T vorsteht.

Diesbezüglich schafft die nachfolgende detailliert beschriebene Stützzusatzeinrichtung 60 (es können auch mehrere Stützzusatzeinrichtungen 60 verwendet werden) Abhilfe.

Die Stützzusatzeinrichtung 60 stützt das Werkstück W1, W2 seitlich neben der Werkzeugmaschine 20 und seitlich neben dem Bearbeitungstisch 30 zusätzlich zu dem Werkstückauflagekörper 51 ab. Die Stützzusatzeinrichtung 60 umfasst einen Trägerkörper 70, der anhand von Trägerkörper-Befestigungsmitteln 61 an der Werkstückauflageeinrichtung 55 lösbar befestigbar ist, sowie einen an dem Auflageträgerkörper 70 beweglich gelagerten und mit dem Trägerkörper 70 lösbar verbindbaren Auflagekörper 80, der mit einer Zusatz-Auflagefläche 81 die Basis-Auflagefläche 53 der Werkstückauflageeinrichtung 50 in der Tiefenrichtung T und/oder quer zur Längsachse Q vergrößert.

An dem Auflagekörper 80 ein Queranschlagkörper 90 ist lösbar befestigbar.

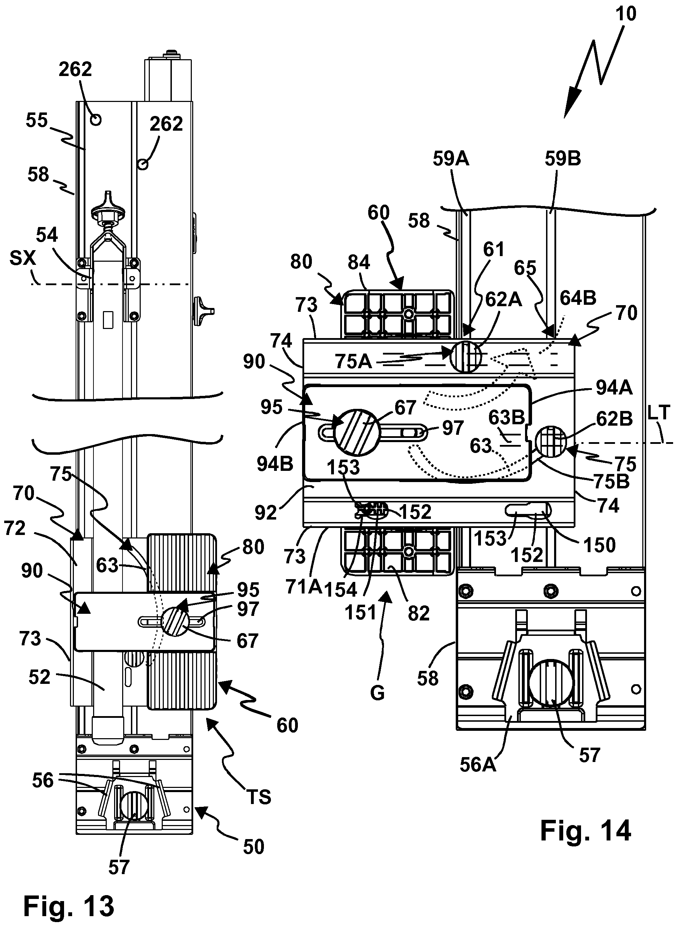

Zudem sind die Komponenten der Stützzusatzeinrichtung 60 relativ zueinander verstellbar und die Stützzusatzeinrichtung 60 bezüglich der Werkstückauflageeinrichtung 50 verstellbar. So kann beispielsweise der Trägerkörper 70 anhand eines Transportlagers 75 zwischen einer in Figur 14 dargestellten Gebrauchsstellung G und einer in Figur 13 dargestellten Transportstellung TS verstellt werden.

Der Auflagekörper 80 kann anhand eines Auflagekörperlagers 85 relativ zum Trägerkörper 70 verstellt werden, so dass er und somit die Zusatz-Auflagefläche 81 unterschiedliche Abstände zu der Basis-Auflagefläche aufweisen können.

Der Queranschlagkörper 90 ist bezüglich des Auflagekörpers 80 anhand eines Queranschlaglagers 95 verstellbar, so dass er beispielsweise zwischen den in den Figuren 2 und 3 dargestellten Stellungen verstellbar ist sowie weiteren Stellungen, die sich aufgrund des Lagerkonzepts des Queranschlaglagers 95 ergeben.

Der Trägerkörper 70 ist als ein Profilkörper ausgestaltet. Der Trägerkörper 70 weist eine Auflagefläche 71 für den Auflagekörper 80 auf. Die Auflagefläche 71 sowie eine Bodenfläche 72 des Trägerkörpers 70 sind an einander entgegengesetzten Seiten des Trägerkörpers 70 vorgesehen. Die Auflagefläche 71 sowie die Bodenfläche 72 sind beispielsweise an einem Wandkörper oder Wandabschnitt 76 des Trägerkörpers 70 vorgesehen.

Der Wandkörper 76 ist zwischen Führungsabschnitten 73 des Trägerkörpers 70 angeordnet. Die Führungsabschnitte 73 weisen jeweils eine Führungsaufnahme 77 des Auflagekörperlagers 85 auf. Die Führungsaufnahmen 77 erstrecken sich zwischen Längsendbereichen 74 des Trägerkörpers 70, vorteilhaft über dessen gesamte Länge.

Der Auflagekörper 80 ist im Wesentlichen plattenartig. Seine beispielsweise in Figur 1 und 2 obere Fläche oder Oberseite weist die Zusatz-Auflagefläche 81 auf. Die Zusatz-Auflagefläche 81 kann eine Rippenstruktur 81A aufweisen, so dass das Werkstück W1, W2 nicht flächig, sondern linienförmig oder punktförmig auf dem Auflagekörper 80 aufliegt. Der Auflagefläche 81 gegenüberliegend ist eine Stützseite 82 vorgesehen, die zur Abstützung auf der Auflagefläche 71 des Trägerkörpers 70 vorgesehen ist.

Der Auflagekörper 80 hat in Draufsicht auf die Zusatz-Auflagefläche 81 eine im Wesentlichen rechteckige Kontur mit langen Schmalseiten 83 sowie diesen gegenüber kürzeren Schmalseiten 84, die sich zwischen den langen Schmalseiten 83 erstrecken.

Eine Höhe H8 des Auflagekörpers 80, also eine Distanz zwischen der Zusatz-Auflagefläche 81 und der Stützseite 82 und/oder eine Distanz zwischen der Zusatz-Auflagefläche 81 und der Auflagefläche 71 des Tragkörpers 70, ist so bemessen, dass die Zusatz-Auflagefläche 81 an der Werkstückauflageeinrichtung 50 im montierten Zustand der Stützzusatzeinrichtung 60 mit der Basis-Auflagefläche 53 fluchtet oder im Wesentlichen fluchtet (Figuren 6 und 7).

Der Queranschlagkörper 90 eignet sich prinzipiell auch zum Auflegen von Werkstücken, indem er eine Auflageseite 91 bereitstellt. Der Auflageseite 91 liegt eine Stützseite 92 gegenüber, die zur Abstützung auf dem Auflagekörper 80, insbesondere dessen Zusatz-Auflagefläche 81, vorgesehen ist.

Der Queranschlagkörper 90 ist plattenartig. Der Queranschlagkörper 90 weist zudem eine in Draufsicht auf die Auflageseite 91 rechteckige Gestalt auf mit langen Queranschlagflächen 93 sowie kürzeren Queranschlagflächen 94. Die Queranschlagflächen 93, 94 sind an den Schmalseiten des Queranschlagkörpers 90 vorgesehen. Der Queranschlagkörper 90 kann anhand des Queranschlaglagers 95 in mehreren Positionen relativ zum Auflagekörper 80 verstellt werden, so dass die Queranschlagflächen 93 und 94 wahlweise als Queranschlagflächen für die Werkstücke W1, W2 genutzt werden können.

Die Stützzusatzeinrichtung 60, insbesondere der Trägerkörper 70, kann anhand von Trägerkörper-Befestigungsmitteln 61 lösbar mit der Werkstückauflageeinrichtung 50 verbunden werden.

Dabei ist es beispielsweise möglich, dass Schrauben, beispielsweise in der Art von Klemmkörpern oder Verbindern 62A, 62B, die den Trägerkörper 70 durchdringen, in entsprechende Schraubaufnahmen 262 (Figur 13) an der Werkstückauflageeinrichtung 50 eingeschraubt werden. Somit ist es möglich, die Stützzusatzeinrichtung 60 an der Werkstückauflageeinrichtung 50 an einer oder mehreren Stellen lösbar anzubringen und von ihr wieder zu entfernen, beispielsweise durch Lösen der Verbinder 62A, 62B. Weitere Schraubaufnahmen 262 können an verschiedenen Stellen der Werkstückauflageeinrichtung 50 vorgesehen sein, sodass die Stützzusatzeinrichtung 60 in verschiedenen Positionen an der Werkstückauflageeinrichtung 50 befestigbar ist.

Die Klemmkörper oder Verbinder 62A, 62B weisen jeweils eine Betätigungshandhabe 162, beispielsweise einen Drehknauf oder Bedienknauf, einen Achskörper 161 auf.

Zur Verstellbarkeit der Stützzusatzeinrichtung 60 bezüglich der Werkstückauflageeinrichtung 50 ist jedoch das nachfolgende Konzept vorgesehen, bei dem die Verbinder 62A und 62B einen Widerlagerkörper 160 aufweisen, der an der Werkstückauflageeinrichtung 50 in einer Lösestellung der Verbinder 62A, 62B verschieblich gelagert ist. Der Achskörper 161 kann in den Widerlagerkörper 160 anhand der Bedienhandhabe 162 eingeschraubt werden, so dass die Klemmfunktion eines jeweiligen Verbinders 62A, 62B realisierbar ist. Durch eine Schraubbetätigung einer jeweiligen Bedienhandhabe 162 wird der Abstand zwischen der Bedienhandhabe 162 und dem Widerlagerkörper 160 entsprechend einem Lösen einer Verklemmung vergrößert oder entsprechend einer Herstellung einer Verklemmung verkleinert.

Der jeweilige Widerlagerkörper 160 greift beispielsweise in die Längsnuten 59A, 59B der Werkstückauflageeinrichtung 50 ein. Die Längsnuten 59A, 59B sind an der der Basis-Auflagefläche 53 entgegengesetzten Seite des Werkstückauflagekörpers 51, z.B. der Unterseite 55, vorgesehen. Die Längsnuten 59A, 59B verlaufen entlang der Längsachse Q, parallel zu einer langen Schmalseite oder Längsseite 58 des Werkstückauflagekörpers 51. Die Längsnuten 59A, 59B bilden Lagernuten eines Stelllagers 65, mit denen die Stützzusatzeinrichtung 60 zwischen mindestens zwei voneinander verschiedenen Gebrauchspositionen bezüglich des Werkstückauflagekörpers 51 verstellbar ist, in denen jeweils die Zusatz-Auflagefläche 81 zum Auflegen eines Werkstücks W bereitsteht. Das Stelllager 65 erlaubt eine Verstellung der gesamten Stützzusatzeinrichtung 60 in Richtung der Längsachse Q bzw. in Längserstreckung des Werkstückauflagekörpers 51. Dabei gleiten die Widerlagerkörper 160 in den Längsnuten 59A, 59B entlang.

Die Trägerkörper-Befestigungsmittel 61 umfassen zudem Lagerkomponenten 75A, 75B des Transportlagers 75 zum Verstellen der Stützzusatzeinrichtung 60 zwischen der Transportstellung TS und der Gebrauchsstellung G. Die Verbinder oder Halteschrauben 62A, 62B, insbesondere die Achskörper 161 derselben, bilden z.B. Lagerkomponenten 75A.

Der Verbinder 62A durchsetzt eine Lageraufnahme 64, der Verbinder 62B eine Führungskulisse 63 des Trägerkörpers 70. Die Führungskulisse 63 und die Lageraufnahme 64 bilden Lagerkomponenten 75B des Transportlagers 75. Die Führungskulisse 63 erstreckt sich bogenförmig um die Lageraufnahme 64. Somit kann der Trägerkörper 70 als Ganzes um eine Lagerachse, die durch den Achskörper 161 des Klemmkörpers 62A bestimmt ist oder die die Lageraufnahme 64 senkrecht durchsetzt, geschwenkt werden.

Man erkennt, dass die Lageraufnahme 64 und die Führungskulisse 63 bei der vorliegenden Ausführungsform im Prinzip einen Bestandteil eines Schwenklagers bilden.

Wenn die Führungskulisse 63 anders als in der Zeichnung dargestellt einen geradlinigen Verlauf aufweisen würde, wäre eine Linearverstellung möglich. Beispielhaft sind in Figur 14 Führungskulissen 64B und 63B eingezeichnet, die von den Klemmkörpern oder Verbindern 62A, 62B durchsetzt sein können und an dem Trägerkörper 70 angeordnet sein können und somit eine Linearverstellung des Trägerkörpers 70 bezüglich des Werkstückauflagekörpers 51 um eine Linearachse LT ermöglichen.

Bei beiden Szenarien, also bei einer Ausgestaltung des Transportlagers 75 als Schwenklager mit beispielsweise der Führungskulisse 63 oder als ein Schiebelager mit beispielsweise den Führungsaufnahmen oder Führungskulissen 63B, 64B ist es möglich, den Trägerkörper 70 und somit die Stützzusatzeinrichtung 60 als Ganzes zwischen der Transportstellung TS und der Gebrauchsstellung G zu verstellen.

In der Gebrauchsstellung G steht ein Tragabschnitt 71A der Auflagefläche 71 vor den Werkstückauflagekörper 51 vor, so dass dort der Auflagekörper 80 abgestützt werden kann. Dabei ist der Auflagekörper 80 jedoch nicht nur in einer einzigen Position bezüglich des Trägerkörpers 70 befestigbar oder anordenbar, sondern in mehreren Positionen nämlich entlang einer Linearachse LA.

Auflagekörper-Fixiermittel 66 zur Fixierung des Auflagekörpers 60 bezüglich des Tragkörpers 70 sowie Anschlagkörper-Fixiermittel 99 zur Fixierung des Queranschlagkörpers 90 bezüglich des Trägerkörpers 70 und/oder des Auflagekörpers 80 haben teilweise ähnliche oder gleiche Komponenten.

Beispielsweise ist ein Haltekörper 67, insbesondere eine Halteschraube, ein Bestandteil beider Fixiermittel 66, 99. Der Haltekörper 67 umfasst einen Achskörper 67, an dessen freiem Endbereich eine Bedienhandhabe 69, beispielsweise ein Bedienknauf, vorgesehen ist. Der Haltekörper 67 ist an der Bedienhandhabe 69 drehbetätigbar.

Der Haltekörper 67 weist an seinem der Bedienhandhabe 69 entgegengesetzten Endbereich einen Schraubabschnitt auf, so dass er beispielsweise in einen Klemmkörper 140 einschraubbar ist, mit dem der Queranschlagkörper 90 bezüglich des Trägerkörpers 70 verspannbar ist, wobei der Auflagekörper 80 zwischen den Trägerkörper 70 und den Queranschlagkörper 90 sandwichartig gespannt wird.

Der Klemmkörper 140 ist in einer Klemmkörperaufnahme 88 an der Unterseite oder Stützseite 82 des Auflagekörpers 80 aufgenommen. Der Klemmkörper 140 umfasst eine Schraubaufnahme 141, in die der Schraubabschnitt am Achskörper 68 des Haltekörpers 66 einschraubbar ist. Die Schraubaufnahme 141 befindet sich an einem Basisabschnitt 142, der beispielsweise eine langgestreckte Gestalt aufweist. Der Klemmkörper 140 besteht beispielsweise aus Kunststoff oder aus Metall. Der Basisabschnitt 142 ist durch seitliche, entlang seinen Längsseiten verlaufende Verstärkungsschenkel 142 verstärkt. An den Längsendbereichen 144 des Basisabschnitts 142 sind Hintergreifkonturen 145 vorgesehen, nämlich an Seitenschenkeln 146. Die Seitenschenkel 146 und die Verstärkungsschenkel 143 begrenzen einen im Wesentlichen quaderförmigen Aufnahmeraum. Beispielsweise ist der Klemmkörper 140 ein Stanz-Biegeteil. Die Hintergreifkonturen 145 stehen nach außen vor dem Längsendbereich 144 vor und greifen in die Führungsaufnahmen 77 des Trägerkörpers 70 ein. Somit ist der Klemmkörper 140 an dem Trägerkörper 70 entlang der Linearachse LA des Auflagekörperlagers 85 verschieblich gelagert. Das Auflagekörperlager 85 umfasst somit ein Schiebelager 85A.

An den Führungsaufnahmen 77 sind Hintergreifkonturen 78 vorgesehen, die von den Hintergreifkonturen 145 hintergriffen sind. Die Hintergreifkonturen 78 sind beispielsweise nach innen und/oder in Richtung des Wandkörpers 76 vorstehende Seitenschenkel der Führungsaufnahmen 77. Zwischen den Hintergreifkonturen 78 und dem Wandkörper 76 sind Längsschlitze 79 der Führungsaufnahmen 77 vorgesehen, in die von dem Auflagekörper 80 vorstehende Führungsvorsprünge 89 eingreifen. Somit ist der Auflagekörper 80 durch seine Führungsvorsprünge 89 unmittelbar in den Führungsaufnahmen 77 geführt. Beispielsweise sind nahe bei den Schmalseiten 88, also an einander entgegengesetzten Seiten des Auflagekörpers 80, jeweils zwei Führungsvorsprünge 89 zum Eingriff in die beiden Führungsaufnahmen 77 bzw. die Längsschlitze 79 vorgesehen.

Der Klemmkörper 140 ist vorteilhaft durch eine Feder 147 in seine Lösestellung, bei der die Hintergreifkonturen 145 einen Abstand zu den Hintergreifkonturen 78 der Führungsaufnahmen 77 haben, belastet. Wenn also der Haltekörper 67 gelöst wird, sozusagen aus dem Klemmkörper 140 ausgeschraubt wird, belastet die Feder 147 den Klemmkörper 140 in Richtung einer Lösestellung. Der Klemmkörper 140 kann jedoch durch Betätigung der Bedienhandhabe 69 bzw. des Haltekörpers 67 in die Klemmstellung gebracht werden, bei der die Hintergreifkonturen 145 in Richtung der Stützschenkel 82 des Auflagekörpers 80 betätigt werden, so dass die Hintergreifkonturen 78 des Trägerkörpers 70 zwischen dem Auflagekörper 80 und die Hintergreifkonturen 145 oder dem Klemmkörper 140 geklemmt sind.

Der Haltekörper 67 durchdringt dabei eine Führungsaufnahme 97 des Queranschlagkörpers 90. Die Führungsaufnahme 97 bildet eine Führungskomponente, in der der Haltekörper 67, insbesondere dessen Achskörper 68, in der Art eines Führungsvorsprungs 67B eingreift und als eine andere Führungskomponente geführt ist.

Wenn der Haltekörper 67 seine Lösestellung einnimmt, ist einerseits die Verklemmung des Klemmkörpers 140 mit dem Trägerkörper 70 gelöst, andererseits kann der Queranschlagkörper 90 relativ zum Auflagekörper 80 verschoben werden, nämlich entlang einer Längserstreckung der Führungsaufnahme 97.

An dem Queranschlagkörper 90 sind weiterhin Führungsvorsprünge 96, nämlich an dessen Stützseite 92, vorgesehen, die in Führungsaufnahmen 86 des Auflagekörpers 80 an dessen Oberseite oder Zusatz-Auflagefläche 81 eingreifen. Die Führungsvorsprünge 96 und die Führungsaufnahmen 86 haben eine langgestreckte Gestalt und/oder weisen im Längsabstand zueinander aufweisende Aufnahmevertiefungen oder Vorsprünge auf, so dass sie eine Längsführung parallel zum Verlauf der Führungsaufnahme 97 bilden.

Der Haltekörper 67 und die Führungsaufnahme 97 bilden Bestandteile eines Linearlagers oder Schiebelagers 95A des Queranschlaglagers 95, welches eine Verstellbarkeit des Queranschlagkörpers 90 bezüglich des Auflagekörpers 80 und somit des Tragkörpers 70 entlang einer Linearachse LB ermöglicht.

Der Haltekörper 67 kann auch als einen Klemmkörper oder Spannkörper bezeichnet werden, dessen Bedienhandhabe 69 einen Klemmkopf oder eine Klemmkontur bildet.

Wenn der Haltekörper 67 ausreichend weit in seine Lösestellung verstellt ist, sodass die Bedienhandhabe 69 vom Klemmkörper 140 einen ausreichend großen Abstand hat, kann der Queranschlagkörper 90 vom Auflagekörper 80 so weit weg verstellt werden, dass die Führungsvorsprünge 96 außer Eingriff mit den Führungsaufnahmen 86 gelangen und somit der Queranschlagkörper 90 um die Achse des Achskörpers 86, der insoweit dann eine Lagerachse bildet, geschwenkt werden kann. Dadurch ist ein Schwenklager 95B realisiert, welches eine Verdrehung des Queranschlagkörpers 90 relativ zum Trägerkörper 70 und somit relativ zur Werkstückauflageeinrichtung 50 ermöglicht.

Die Führungsaufnahme 97, sozusagen ein Führungsschlitz, verläuft vorteilhaft zwischen den langen Queranschlagflächen 93, insbesondere etwa quer mittig. Die Führungsaufnahme 97 erstreckt sich von einem Bereich nahe bei der kurzen Queranschlagfläche 94B in Richtung der anderen Queranschlagfläche 94A, hat aber zu dieser einen größeren Abstand als zur Queranschlagfläche 94B. Somit kann durch ein Verdrehen des Queranschlagkörpers 90 um eine durch den Achskörper 68 definierte Schwenkachse S des Schwenklagers 95B wahlweise die Queranschlagfläche 94A oder 94B näher zur Werkstückauflageeinrichtung 50, insbesondere die Basis-Auflagefläche 53, gebracht werden. Der Queranschlagkörper 90 steht wie ein Teleskoparm in Richtung der Basis-Auflagefläche 53 vor.

Man erkennt in der Zeichnung, dass der Queranschlagkörper 90 sogar auf die Basis-Auflagefläche 53 zumindest partiell verstellbar ist, so dass sich die vorteilhafte Eigenschaft ergibt, dass mindestens eine Queranschlagfläche 93 und/oder 94 in einem Bereich oberhalb der Basis-Auflagefläche 53 verstellbar ist.

In Figur 5 ist zum Beispiel eine Konfiguration gezeigt, bei der eine Schraubzwinge Z das Werkstück W1 mit dem Auflagekörper 80 verspannt, wobei zudem eine Schmalseite eines Längsendbereichs des Werkstücks W1 an der Queranschlagfläche 94 des Queranschlagkörpers 90 anschlägt. Dieser stützt sich beispielsweise mit Stützvorsprüngen 98 an der Oberseite der Werkstückauflageeinrichtung 50, nämlich der Basis-Auflagefläche 53 ab.

Die Stützvorsprünge 93 haben den Vorteil, dass sich zwischen der Unterseite oder Auflageseite 91 des Queranschlagkörpers 90 und der ihr gegenüberliegenden Fläche, beispielsweise der Basis-Auflagefläche 53, ein Aufnahmeraum oder Durchlassraum für Späne vorhanden ist.

Durch die Betätigung der Klemmschraube bzw. des Haltekörpers 67 kann die Fixierung sowohl des Auflagekörperlagers 85 als auch des Queranschlaglagers 95 gelöst oder hergestellt werden, so dass eine einfache Bedienung gegeben ist. Mithin sind also die verschiedenen Auflageflächen und Anschlagflächen der Stützzusatzeinrichtung 60 durch Betätigen einer einzigen Bedienhandhabe 69 in eine Lösestellung und somit in eine relative Verstellbarkeit bringbar und relativ zueinander fixiert. Dadurch ergibt sich eine besonders einfache Betätigung.

Es ist aber auch möglich, die einzelnen Komponenten, nämlich den Auflagekörper 80 und den Queranschlagkörper 90 voneinander zu lösen und in anderen Positionen wieder miteinander zu verbinden bzw. zu verschrauben.

So ist beispielsweise an dem Trägerkörper 90 eine Anordnung von Befestigungsaufnahmen 150, 151 für den Transport der Stützzusatzeinrichtung 60 an der Werkstückauflageeinrichtung 90 vorgesehen. Der in die Transportstellung TS verstellte Trägerkörper 70 bildet dabei eine Befestigungsbasis für den Auflagekörper 80. Dabei kann der Haltekörper 67 die Führungsaufnahme 97 durchdringend in den Klemmkörper 140 eingeschraubt werden, um die Hintergreifkonturen 145 in einem Hintergriff mit den Befestigungsaufnahmen 150, nämlich im Hintergriff mit Klemmabschnitten 153 derselben, zu verspannen / zu verklemmen. Die Hintergreifkonturen 145 können durch Einführabstände 152 in die Befestigungsaufnahmen 150 eingebracht und dann verschoben werden, bis zumindest eine der Hintergreifkonturen 145 an einem Längsanschlag 154 einer der Befestigungsaufnahmen 150, 151 anschlägt. Sodann wird der Klemmkörper 140 in seine Klemmstellung betätigt.

Eine weitere, alternative Fixierung des Queranschlagkörpers 90 und des Auflagekörpers 80 ist in Figur 7 dargestellt. Dabei ist der Haltekörper 67 die Führungsaufnahme / den Führungsschlitz 97 des Queranschlagkörpers 90 durchdringend in eine Schraubaufnahme 87 an der Stützseite oder der Unterseite 82 des Auflagekörpers 80 eingeschraubt, wobei der Auflagekörper 80 und der Queranschlagkörper 90 an einander entgegengesetzten Seiten des Trägerkörpers 70 angeordnet sind, beispielsweise an der Auflagefläche 71 bzw. der Bodenfläche 72. Der Achskörper 86 durchdringt dabei beispielsweise die Lageraufnahme 64.

Ein mittlerer, sich zwischen den Führungsvorsprüngen 89 erstreckender Abschnitt der Stützseite 82 des Auflagekörpers 80 ist dabei am Wandkörper 76 des Trägerkörpers 70 abgestützt. Von der anderen Seite her, d.h. in Figur 7 von unten her, wirkt der Queranschlagkörper 90 als zusätzliche Abstützung und Verspannung. Dieser liegt mit seiner Stützseite 92 flächig an dem Wandkörper 76 an. Man erkennt, dass dadurch eine äußerst belastbare Konfiguration gegeben ist, die auch das Auflegen schwerer Werkstücke W1 oder W2 ermöglicht.

Die Lageraufnahme 64 ist vorzugsweise als ein Langloch ausgestaltet, so dass beispielsweise die vorgenannte Konfiguration gemäß Figur 7 in dem Langloch der Lageraufnahme 64 entlang der Linearachse LA verstellbar ist.

Eine optimale Abstützung ist dadurch gegeben, dass der Auflagekörper 80 sowohl in beiden Führungsaufnahmen 77 geführt als anhand des Klemmkörpers 140 verklemmbar ist.

Die Queranschlagflächen 93, 94 können einerseits als beispielsweise Längsanschläge (Figur 5) oder Seitenanschläge (Figuren 1 oder 2) des Werkstücks W1 dienen. Sie eignen sich aber auch in bevorzugter Weise als Anschlagflächen zum Bearbeiten von hochstehenden Werkstücken, beispielsweise des Werkstücks W2, insbesondere Deckenprofilen. Dabei ist in Figur 1 beispielsweise nur eine Stützzusatzeinrichtung 60 rechts von der Linearachse L eingezeichnet. Ohne weiteres könnte auch eine weitere Stützzusatzeinrichtung 60 links davon, nämlich an der Werkstückauflageeinrichtung 50A angeordnet sein, so dass das Werkstück W2 beidseitig bzw. an einander entgegengesetzten Seiten des Arbeitswerkzeugs 24 optimal abgestützt ist.

Des Weiteren können Hilfsmittel, beispielsweise sogenannte Opferleisten oder Opferbretter, ohne weiteres mit der Stützzusatzeinrichtung 60 verbunden werden. Dabei ist es auch möglich, dass diese dauerhaft an deren Komponente, beispielsweise dem Trägerkörper 70, dem Auflagekörper 80 oder dem Queranschlagkörper 90 verbleiben, weil nämlich jede dieser Komponenten von der Werkstückauflageeinrichtung 50 und/oder von der jeweils anderen Komponente trennbar und lösbar wieder mit dieser verbindbar ist.

So können beispielsweise Durchtrittsöffnungen 170, 180 und 190 an dem Trägerkörper 70, dem Auflagekörper 80 und dem Queranschlagkörper 90 vorgesehen sein, durch die hindurch Schrauben in das Werkstück W1 oder W2 oder auch in einen in der Zeichnung nicht dargestellten Stützkörper, beispielsweise eine Holzleiste, einschraubbar sind. Wenn ein derartiger Hilfskörper mit zwei Auflagekörpern 80 und/oder Queranschlagkörpern 90 verbunden ist, die zu zwei unabhängigen Stützzusatzeinrichtungen 60, 60B gehören, die beispielsweise an einander entgegengesetzten Seiten des Arbeitswerkzeugs 24 angeordnet sind (Figur 3), kann man diese Gesamtkonfiguration sozusagen verschraubt lassen und von der Werkzeugmaschine 20 entfernen oder bei Bedarf wieder anbringen.

Aber auch ein Einhaken eines Haltekörpers ist beispielsweise denkbar. So kann an einer der Queranschlagflächen 93 oder 94, beispielsweise der Queranschlagfläche 94A, eine Halteaufnahme 191 für einen Schraubenkopf vorgesehen sein. Dieser kann sozusagen in die Halteaufnahme 191 eingehakt werden (Figur 2).

Ein in Figur 3 dargestellter Stützkörper oder Queranschlagkörper 290 kann beispielsweise mit einer oder mehreren Stützzusatzeinrichtungen 60 zusammenwirkend verwendet werden. Der Queranschlagkörper 290 ist plattenartig. Der Queranschlagkörper 290 weist eine lang gestreckte Gestalt auf. Der Queranschlagkörper 290 weist einen mittleren Abschnitt 291 auf, der zur Auflage auf der Werkstückauflagefläche 31, also dem Bearbeitungstisch 30, vorgesehen ist. Der mittlere Abschnitt 291 ist zwischen Befestigungsabschnitten 294, 295 angeordnet. In der mittleren Abschnitt 291 können Sägeschlitze vorgesehen sein. Die Sägeschlitze können aber auch bei der Benutzung des Queranschlagkörpers 92 entstehen, wenn das Arbeitswerkzeug 24 in den Queranschlagkörper 290 einsägt oder eindringt.

Der Befestigungsabschnitt 295 ist vorzugsweise zur Befestigung an beispielsweise der in Figur 3 dargestellten Stützzusatzeinrichtung 60 vorgesehen, die an der Werkstückauflageeinrichtung 50B angeordnet ist. Der Befestigungsabschnitt 294 hingegen kann an einer der Seitenstützen 29, insbesondere der dort vorgesehenen Seitenauflageflächen 32, abgestützt sein, alternativ auch an einer weiteren, an der Werkstückauflageeinrichtung 50A angeordneten Stützzusatzeinrichtung 60B, insbesondere wenn diese näher bei der Werkzeugmaschine 20 angeordnet ist.

Zur Verbindung des Queranschlagkörpers 290 mit der Stützzusatzeinrichtungen 60, 60B eignet sich beispielsweise eine Verschraubung mit einer die Durchtrittsöffnung 180 des Auflagekörpers 80 durchdringenden Schraube SB, die in den Queranschlagkörper 290 eingeschraubt ist oder wird.

Der Befestigungsabschnitt 295 weist ferner eine Durchtrittsöffnung 296 auf, die von beispielsweise von einem Halteschenkel der Schraubzwinge Z durchdrungen sein kann, sodass diese den Queranschlagkörper 290 mit dem Auflagekörper 80 der Stützzusatzeinrichtung 60 verspannen kann.

Der Queranschlagkörper 290 weist eine langgestreckte Queranschlagfläche 293 auf, an der beispielsweise das Werkstück W2 abgestützt werden kann. An der der Queranschlagfläche 293 gegenüberliegenden Längsseite würde eine ebenso geradlinige, die Befestigungsabschnitte 294, 295 auf kürzestem Wege verbindende Längsseite die Bedienung der Werkzeugmaschine 20 behindern. Um diesem abzuhelfen ist eine Außenumfangskontur 297 des Queranschlagkörpers 290 an die Umfangskontur der Werkzeugmaschine 20 im Bereich der Werkstückauflagefläche 31 angepasst. So sind beispielsweise ausgehend von den Befestigungsabschnitten 294, 295 Vertiefungen 292 vorgesehen, die den Vertiefungen zwischen den Seitenstützen 29 und dem in Draufsicht runden Bearbeitungstisch 30 etwa entsprechen. Zwischen den Vertiefungen 292 der Außenumfangskontur 297 erstreckt sich ein runder Abschnitt 298, der der Außenumfangskontur des Bearbeitungstisches 30 etwa entspricht.

Der Queranschlagkörper 290 kann einen Bestandteil eines Systems bilden, welches den Queranschlagkörper und eine oder mehrere der Stützzusatzeinrichtungen 60 umfasst.

Der Queranschlagkörper 290 kann aber auch auf Bedarf hergestellt werden, beispielsweise aus Holz oder einem sonstigen fräs- und/oder sägbaren Material. Zur Herstellung des Queranschlagkörpers 290 eignet sich beispielsweise eine Schablone 390, die eine Umfangskontur 397 entsprechend der Umfangskontur 297 aufweist, also beispielsweise Vertiefungen 392 für die Vertiefungen 292, einen mittleren Abschnitt 391 korrespondierend mit dem Abschnitt 291 sowie eine Markierung 396 für eine Bohrung oder Durchtrittsöffnung in der Art der Durchtrittsöffnung 296. Die Schablone 390 kann auf ein plattenartiges Werkstück, insbesondere ein Holzwerkstück, zum Beispiel eine Holzplatte oder dergleichen, aufgelegt werden, um die Umfangskontur 397 nachzuzeichnen oder unmittelbar um die Schablone 390 entsprechend der Umfangskontur 397 entlang zu sägen, zum Beispiel mit einer Stichsäge.

Der Auflagekörper 80 kann integral eine oder mehrere Queranschlagflächen 193, 194 aufweisen. Die Queranschlagflächen 193, 194 sind zu der Zusatz-Auflagefläche 81 winkelig, insbesondere rechtwinkelig. Bevorzugt ist es, wenn die Queranschlagflächen 193, 194 ebenfalls zueinander winkelig sind. Beispielsweise sind die Queranschlagflächen 193, 194 an einem Queranschlag-Abschnitt 190 des Auflagekörpers 80 vorgesehen, der vor die Zusatz-Auflagefläche 81 vorsteht.

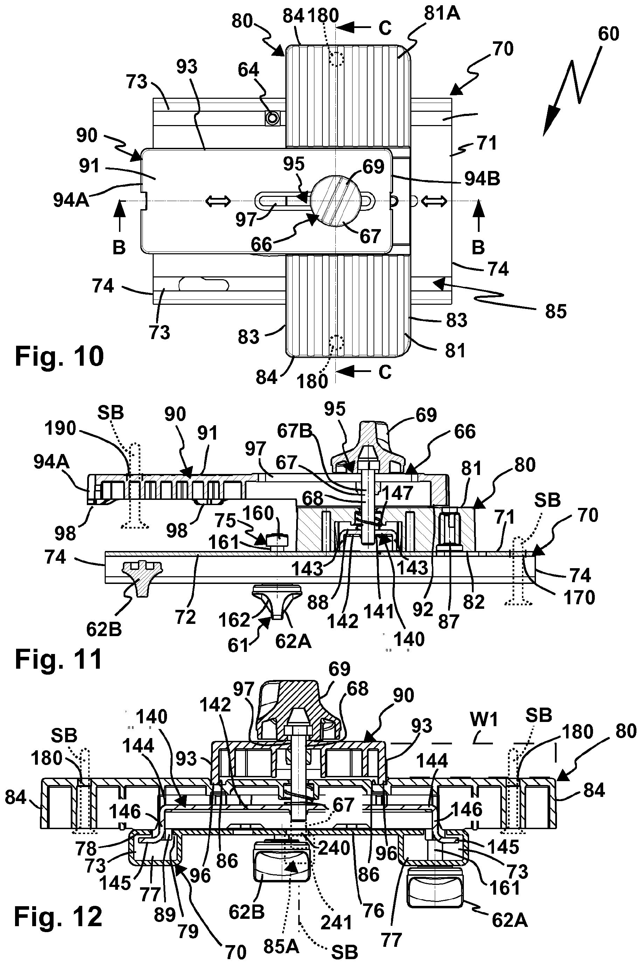

Wenn gemäß einem in Figur 12 angedeuteten Ausführungsbeispiel der Verbinder 67 beispielsweise eine Lageraufnahme 240 am Trägerkörper 70, beispielsweise dessen Wandkörper 76, durchdringt und in eine Mutter 241 eingeschraubt ist, kann der Auflagekörper 80 bezüglich des Trägerkörpers 70 um eine Schwenkachse SB schwenkbar gelagert sein, sodass das Auflagekörperlager 85 ein Schwenklager 85B umfasst.

## Patentansprüche

1. Stützzusatzeinrichtung für eine Werkstückauflageeinrichtung (50) einer halbstationären Werkzeugmaschine (20), insbesondere einer Sägemaschine, wobei ein Werkstückauflagekörper (51) der Werkstückauflageeinrichtung (50) eine bei Gebrauch im wesentlichen horizontale Basis-Auflagefläche (53) zum Auflegen eines Werkstücks (W1, W2) für eine Bearbeitung, insbesondere für einen Sägeschnitt (SX), durch ein Arbeitswerkzeug (24) der Werkzeugmaschine (20) aufweist, wobei die Stützzusatzeinrichtung (60) eine Zusatz-Auflagefläche (81) und einen Trägerkörper (70) mit Trägerkörper-Befestigungsmitteln (61) zur lösbaren Befestigung an der Werkstückauflageeinrichtung (50) aufweist, wobei im an der Werkstückauflageeinrichtung (50) befestigten Zustand der Stützzusatzeinrichtung (60) die Zusatz-Auflagefläche (81) mit der Basis-Auflagefläche (53) zumindest im Wesentlichen fluchtet, wobei sie einen Auflagekörper (80) aufweist, der anhand eines ein Schiebelager (85A) und/oder ein Schwenklager (85B) aufweisenden Auflagekörperlagers (85) an dem Trägerkörper (70) zwischen mindestens zwei voneinander verschiedenen Relativpositionen zu der Basis-Auflagefläche (53) beweglich gelagert und in den Relativpositionen an dem Trägerkörper (70) anhand von Auflagekörper-Fixiermitteln (66) lösbar fixierbar ist, wobei der Auflagekörper (80) die Zusatz-Auflagefläche (81) aufweist und/oder eine Befestigungsbasis für einen Queranschlagkörper (90) bildet, der an dem Auflagekörper (80) anhand von Anschlagkörper-Fixiermittel (99) lösbar befestigbar ist und mindestens eine Queranschlagfläche (93, 94) aufweist, die zu der Zusatz-Auflagefläche (81) winkelig, insbesondere rechtwinkelig, ist, **dadurch gekennzeichnet, dass** die Auflagekörper-Fixiermittel (66) durch die die Anschlagkörper-Fixiermittel (99) zumindest teilweise gebildet sind.

2. Stützzusatzeinrichtung nach Anspruch 1, **dadurch gekennzeichnet, dass** der Auflagekörper (80) mindestens eine Queranschlagfläche (193, 194) aufweist, die an dem Auflagekörper (80) ortsfest angeordnet ist und zu der Zusatz-Auflagefläche (81) winkelig, insbesondere rechtwinkelig, ist, und/oder dass der Queranschlagkörper (90) an dem Auflagekörper (80) anhand eines Queranschlaglagers (95) beweglich gelagert ist, welches ein Schwenklager (95B) und/oder ein Schiebelager (95A) umfasst.

3. Stützzusatzeinrichtung nach Anspruch 2, **dadurch gekennzeichnet, dass** das Queranschlaglager (95) eine an dem Auflagekörper (80) angeordnete erste Führungskomponente und eine an dem Queranschlagkörper (90) angeordnete zweite Führungskomponente aufweist, wobei von denen eine Führungskomponente eine Führungsaufnahme (97), insbesondere eine Führungskulisse oder eine Führungsschlitz, ist, in die ein Führungsvorsprung (67B) der anderen Führungskomponente eingreift und an der der Führungsvorsprung (67B) geführt ist.

4. Stützzusatzeinrichtung nach Anspruch 3, **dadurch gekennzeichnet, dass** mindestens eine der Führungskomponenten einen Spannkörper, insbesondere einen Spannbolzen, der Anschlagkörper-Fixiermittel (99) umfasst oder bildet, wobei der Queranschlagkörper (90) mit dem Auflagekörper (80) anhand des Spannkörpers verspannbar ist, und/oder dass die Führungsaufnahme (97) eine Längsgestalt aufweist und der Führungsvorsprung (67B) entlang einer Schiebeachse in der Führungsaufnahme (97) längsverschieblich gelagert ist, wobei vorteilhaft vorgesehen ist, dass der Führungsvorsprung (67B) an der Führungsaufnahme (97) drehbar gelagert ist.

5. Stützzusatzeinrichtung nach einem der Ansprüche 3 oder 4, **dadurch gekennzeichnet, dass** sich die Führungsaufnahme (97) quer oder parallel zu mindestens einer Queranschlagfläche (93, 94) des Queranschlagkörpers (90) und/oder zwischen einander entgegengesetzten Queranschlagflächen (93, 94) des Queranschlagkörpers (90) erstreckt, sodass die Queranschlagfläche (93, 94) entlang der Schiebeachse der Führungsaufnahme (97) bezüglich des Auflagekörpers (80) verstellbar ist, wobei vorteilhaft vorgesehen ist, dass die Führungsaufnahme (97) sich zwischen an einander entgegengesetzten Seiten des Queranschlagkörpers (90) vorgesehenen Queranschlagflächen (94A, 94B) erstreckt, wobei die Führungsaufnahme (97) zu der einen Queranschlagfläche (94A) einen größeren Abstand als zu der anderen Queranschlagfläche (94B) aufweist.

6. Stützzusatzeinrichtung nach einem der Ansprüche 2 bis 5, **dadurch gekennzeichnet, dass** das Queranschlaglager (95) und das Auflagekörperlager (85) mindestens zwei voneinander verschiedene Bewegungsfreiheitsgrade, insbesondere Schiebelager mit zueinander winkeligen, insbesondere rechtwinkeligen, Verschiebeachsen, aufweisen und/oder dass der Auflagekörper (80) und der Queranschlagkörper (65) bezüglich des Trägerkörpers (70) in der Art eines Kreuzschlittens gelagert sind und/oder dass das Queranschlaglager (95) zwischen Führungsaufnahmen (77) des Auflagekörperlagers (85) angeordnet ist.

7. Stützzusatzeinrichtung nach einem der vorhergehenden Ansprüche, **dadurch gekennzeichnet, dass** der Queranschlagkörper (90) bezüglich des Trägerkörpers (70) anhand des Auflagekörpers (80) teleskopierbar in Bezug auf mindestens eine Teleskopachse gelagert ist und/oder dass mindestens ein Haltekörper (67) und/oder Betätigungskörper der Anschlagkörper-Fixiermittel (99) zum Fixieren des Auflagekörpers (80) bezüglich des Trägerkörpers (70) vorgesehen und/oder ausgestaltet ist und/oder der Auflagekörper (80) sandwichartig zwischen dem Trägerkörper (70) und dem Queranschlagkörper (90) verklemmbar ist.

8. Stützzusatzeinrichtung nach einem der vorhergehenden Ansprüche, **dadurch gekennzeichnet, dass** die Zusatz-Auflagefläche (81) des Auflagekörpers (80) an mindestens einer Seite, vorzugsweise an einander entgegengesetzten Seiten, im Sinne einer Vergrößerung einer durch die Basis-Auflagefläche (53) und die Zusatz-Auflagefläche (81) gebildeten Gesamt-Auflagefläche vor den Trägerkörper (70) seitlich vorsteht und/oder dass sie anhand der Trägerkörper-Befestigungsmittel (61) in einer Transportstellung (TS) und in einer Gebrauchsstellung (G) an der Werkstückauflageeinrichtung (50) anordenbar, insbesondere befestigbar, ist, wobei ein Tragabschnitt (71A) des Trägerkörpers (70) zum Tragen des Auflagekörpers (80) in der Gebrauchsstellung (G) weiter vor die Werkstückauflageeinrichtung (50) vorsteht als in der Transportstellung (TS), wobei vorteilhaft vorgesehen ist, dass die Trägerkörper-Befestigungsmittel (61) mindestens eine Lagerkomponente (75A, 75B), insbesondere eine Führungskulisse (63) und/oder eine Lageraufnahme (64), eines Transportlagers (75), insbesondere eines Schiebelagers und/oder eines Schwenklagers aufweisen, anhand dessen der Trägerkörper (70) bezüglich Werkstückauflageeinrichtung (50) zwischen der Transportstellung (TS) und der Gebrauchsstellung (G) beweglich gelagert ist.

9. Stützzusatzeinrichtung nach einem der vorhergehenden Ansprüche, **dadurch gekennzeichnet, dass** mindestens eine Komponente der Stützzusatzeinrichtung, insbesondere der Queranschlagkörper (90), eine Fixiereinrichtung zum Fixieren mindestens einer Komponente der Werkstückauflageeinrichtung (50) in einer zum Transportieren geeigneten Position an dem Werkstückauflagekörper (51) der Werkstückauflageeinrichtung (50) bildet, wobei vorteilhaft vorgesehen ist, dass die mindestens eine Komponente der Werkstückauflageeinrichtung (50) eine Stütze zum Abstützen des Werkstückauflagekörpers (51) ist, welche von der Komponente der Stützzusatzeinrichtung (60) in einer an dem Werkstückauflagekörper (51) anliegenden Position, insbesondere in einer zu dem Werkstückauflagekörper (51) hin geschwenkten Position, fixiert oder fixierbar ist.

10. Stützzusatzeinrichtung nach einem der vorhergehenden Ansprüche, **dadurch gekennzeichnet, dass** das Auflagekörperlager (85) zwei zu einer Schiebeachse des Auflagekörperlagers (85) parallel verlaufende und quer zu der Schiebeachse zueinander beabstandete Führungsaufnahmen (77) aufweist, in denen Führungsvorsprünge parallel zur Schiebeachse geführt sind, und/oder dass die Paarungen von Führungsaufnahme (77) und Führungsvorsprung an einander entgegengesetzten Längsseitenbereichen oder Randbereichen des Trägerkörpers (70) angeordnet sind und/oder dass die Auflagekörper-Fixiermittel (66) mindestens einen Klemmkörper aufweisen, der mit einer der Führungsaufnahmen (77) verklemmbar ist, und/oder mindestens eine Hintergreifkontur, insbesondere eine Hakenkontur, aufweisen, die in einen Hintergriff mit einer der Führungsaufnahmen (77) bringbar ist, sodass der Auflagekörper (80) allseitig quer zu der Schiebeachse an der Führungsaufnahme (77) gehalten ist, und/oder dass die Auflagekörper-Fixiermittel (66) zur Fixierung des Auflagekörpers (80) an einander entgegengesetzten Seiten des Trägerkörpers (70) ausgestaltet und/oder vorgesehen sind und/oder dass der Trägerkörper (70) und/oder der Werkstückauflagekörper (51) als ein Profilkörper und/oder als ein Strangpress-Profil ausgestaltet ist und/oder dass der Trägerkörper (70) und/oder der Werkstückauflagekörper (51) eine Führungsaufnahme (77) mit einer Haltekontur zum Hintergreifen durch eine Hintergreifkontur und/oder einen Nutenstein aufweisen und/oder dass der Auflagekörper (80) und/oder der Trägerkörper (70) und/oder der Queranschlagkörper (90) plattenartig ist.

11. Stützzusatzeinrichtung nach einem der vorhergehenden Ansprüche, **dadurch gekennzeichnet, dass** der Auflagekörper (80) und/oder der Trägerkörper (70) und/oder der Queranschlagkörper (90) mindestens eine Durchtrittsöffnung (170, 180, 190) für eine zum Verschrauben eines Körpers, insbesondere des Werkstücks, mit dem Auflagekörper (80) oder dem Trägerkörper (70) oder dem Queranschlagkörper (90) vorgesehene Schraube (SB) und/oder mindestens eine Halteaufnahme (191) für einen an dem Werkstück oder einer Abstützung für das Werkstück eingeschraubten Haltekörper (HK), insbesondere für einen Schraubenkopf, aufweist.

12. Stützzusatzeinrichtung nach einem der vorhergehenden Ansprüche, **dadurch gekennzeichnet, dass** sie einen Queranschlagkörper (290) oder eine Schablone (390) zur Herstellung eines Queranschlagkörper (290) aufweist, der eine an eine Außenumfangskontur der Werkzeugmaschine (20) angepasste Umfangskontur (297), umfassend insbesondere eine Rundung (298) und/oder eine Vertiefung (292), aufweist und/oder zur Verbindung der Stützzusatzeinrichtung (60) mit einer weiteren, insbesondere gleichartigen, Stützzusatzeinrichtung (60B) vorgesehen und/oder ausgestaltet ist, und/oder dass sie zu einer Montage an einer Längsseite (58), insbesondere einer Längsschmalseite, der Werkstückauflageeinrichtung (50), insbesondere des Werkstückauflagekörpers (51), vorgesehen und/oder ausgestaltet ist, wobei die Längsseite (58) entlang einer Längserstreckung der Werkstückauflageeinrichtung (50) verläuft und länger als eine Querseite der Werkstückauflageeinrichtung (50) ist.

13. Stützzusatzeinrichtung nach einem der vorhergehenden Ansprüche, **dadurch gekennzeichnet, dass** die Trägerkörper-Befestigungsmittel (61) Lagerkomponenten (75A, 75B) eines Stelllagers (65) bilden, mit dem die Stützzusatzeinrichtung (60) relativ zu der Werkstückauflagekörper (51) zwischen mindestens zwei voneinander verschiedenen Gebrauchspositionen, insbesondere Längspositionen bezüglich einer Längserstreckung des Werkstückauflagekörpers (51) verstellbar ist, in denen jeweils die Zusatz-Auflagefläche (81) zum Auflegen eines Werkstücks (W) bereitsteht, und/oder dass die mindestens eine Queranschlagfläche (93, 94) und/oder der Queranschlagkörper (90) in einen Bereich auf der Basis-Auflagefläche (53) und/oder in eine sich auf der Basis-Auflagefläche (53) abstützende Stellung verstellbar ist und/oder dass die Auflagekörper-Fixiermittel (66) und/oder die Anschlagkörper-Fixiermittel (99) zur Montage des Auflagekörpers (80) und des Queranschlagkörpers (90) an einander entgegengesetzten Seiten des Trägerkörpers (70) vorgesehen und/oder ausgestaltet sind und/oder dass der Trägerkörper (70) eine Auflagefläche (71) zum Auflegen des Auflagekörpers (80) aufweist, die im an der Werkstückauflageeinrichtung (50) montierten Zustand des Trägerkörpers (70) mit einer zur Befestigung des Trägerkörpers (70) vorgesehenen Unterseite (51) der Werkstückauflageeinrichtung (50) fluchtet und/oder an einer zur Befestigung des Trägerkörpers (70) vorgesehenen Unterseite (51) der Werkstückauflageeinrichtung (50) zumindest im Wesentlichen flächig anliegt, und/oder dass der Trägerkörper (70) im an der Werkstückauflageeinrichtung (50) montierten Zustand des Trägerkörpers (70) in der Art eines Tablars seitlich vor die Werkstückauflageeinrichtung (50) vorsteht und/oder dass ein Abstand zwischen der Zusatz-Auflagefläche (81) und einer Unterseite (82) des Auflagekörpers (80) gleich oder im Wesentlichen gleich ist wie ein Abstand zwischen der Basis-Auflagefläche (53) der Werkstückauflageeinrichtung (50) und einer zur Befestigung des Trägerkörpers (70) vorgesehenen Unterseite (51) der Werkstückauflageeinrichtung (50).

14. Werkstückauflageeinrichtung (50) mit einer Stützzusatzeinrichtung (60) nach einem der vorhergehenden Ansprüche, wobei vorteilhaft vorgesehen ist, dass sie eine sich insbesondere quer zu einer Arbeitsrichtung des Arbeitswerkzeugs (24) der Werkzeugmaschine (20) erstreckende Zusatzeinrichtung zur lösbaren Befestigung an der Werkzeugmaschine (20) bildet.

15. Werkzeugmaschine (20), insbesondere Sägemaschine, mit einer Werkstückauflageeinrichtung (50) und einer Stützzusatzeinrichtung (60) nach einem der vorhergehenden Ansprüche.

## Claims

1. Supplementary support assembly for a workpiece support assembly (50) of a semi-stationary machine tool (20), in particular a machine saw, wherein a workpiece support body (51) of the workpiece support assembly (50) has a base supporting surface (53) which is substantially horizontal during use for supporting a workpiece (W1, W2) for machining, in particular for sawing (SX) by a tool (24) of the machine tool (20), wherein the supplementary support assembly (60) has a supplementary supporting surface (81) and a support body (70) with support body mounting means (61) for detachable mounting on the workpiece support assembly (50), wherein, when the supplementary support assembly (60) is mounted on the workpiece support assembly (50), the supplementary supporting surface (81) is at least substantially aligned with the base supporting surface (53), wherein it has a supporting body (80) which is mounted by means of a support body bearing (85) comprising a sliding bearing (85A) and/or a pivoting bearing (85B) on the support body (70) to be movable between at least two different positions relative to the base supporting surface (53) and can be detachably fixed on the support body (70) in the relative positions by means of supporting body fixing means (66), wherein the supporting body (80) comprises the supplementary supporting surface (81) and/or forms a mounting base for a transverse stop body (90) which can be detachably mounted on the supporting body (80) by means of stop body fixing means (99) and has at least one transverse stop face (93, 94) which is at an angle to the supplementary supporting surface (81), particularly at a right angle thereto **characterised in that** the supporting body fixing means (66) are at least partially formed by the stop body fixing means (99).

2. Supplementary support assembly according to claim 1, **characterised in that** the supporting body (80) has at least one transverse stop face (193, 194), which is arranged in a stationary manner on the supporting body (80) and is at an angle to the supplementary supporting surface (81), particularly at a right angle thereto and/or **in that** the transverse stop body (90) is movably mounted on the supporting body (80) by means of a transverse stop bearing (95) comprising a pivoting bearing (95B) and/or a sliding bearing (95A).

3. Supplementary support assembly according to claim 2, **characterised in that** the transverse stop bearing (95) has a first guide component arranged on the supporting body (80) and a second guide component arranged on the transverse stop body (90), wherein one guide component of which is a guide seat (97), in particular a guide link or guide slot, in which a guide projection (67B) of the other guide component engages and on which the guide projection (67B) is guided.

4. Supplementary support assembly according to claim 3, **characterised in that** at least one of the guide components comprises or forms a clamping body, in particular a clamping bolt, which comprises or forms stop body fixing means (99), wherein the transverse stop body (90) can be clamped to the supporting body (80) by means of the clamping body, and/or **in that** the guide seat (97) has a longitudinal shape and the guide projection (67B) is mounted in the guide seat (97) so as to be longitudinally displaceable along a sliding axis, wherein it is advantageously provided that the guide projection (67B) is rotatably mounted on the guide seat (97).

5. Supplementary support assembly according to one of claims 3 or 4, **characterised in that** the guide seat (97) extends transversely or parallel to at least one transverse stop face (93, 94) of the transverse stop body (90) and/or between opposite transverse stop faces (93, 94) of the transverse stop body (90), so that the transverse stop face (93, 94) is adjustable along the sliding axis of the guide seat (97) relative to the supporting body (80), wherein it is advantageously provided that the guide seat (97) extends between transverse stop faces (94A, 94B) provided on opposite sides of the transverse stop body (90), wherein the guide seat (97) has a greater distance to one transverse stop face (94A) than to the other transverse stop face (94B).

6. Supplementary support assembly according to one of claims 2 to 5, **characterised in that** the transverse stop bearing (95) and the supporting body bearing (85) have at least two different degrees of freedom of movement, in particular sliding bearings with displacement axes which are at angles to one another, in particular at right angles thereto, and/or **in that** the supporting body (80) and the transverse stop body (65) are mounted in the manner of a compound slide rest with respect to the support body (70) and/or **in that** the transverse stop bearing (95) is arranged between guide seats (77) of the supporting body bearing (85).

7. Supplementary support assembly according to any one of the preceding claims, **characterised in that** the transverse stop body (90) is mounted with respect to the support body (70) by means of the supporting body (80) so as to be telescopic with respect to at least one telescopic axis and/or **in that** at least one retaining body (67) and/or actuating body of the stop body fixing means (99) is provided and/or configured for fixing the supporting body (80) relative to the support body (70) and/or **in that** the supporting body (80) can be clamped in a sandwich-like manner between the support body (70) and the transverse stop body (90).

8. Supplementary support assembly according to any one of the preceding claims, **characterised in that** the supplementary supporting surface (81) of the supporting body (80) projects laterally in front of the support body (70) on at least one side, preferably on opposite sides, in the sense of an enlargement of a total supporting surface formed by the base supporting surface (53) and the supplementary supporting surface (81) and/or **in that** it can be arranged, in particular mounted, on the workpiece support assembly (50) in a transport position (TS) and in a use position (G) by means of the support body mounting means (61), wherein a support section (71A) of the support body (70) projects further in front of the workpiece support assembly (50) in the use position (G) than in the transport position (TS) for supporting the supporting body (80), wherein it is advantageously provided that the support body mounting means (61) comprise at least one bearing component (75A, 75B), in particular a guide link (63) and/or a bearing seat (64), of a transport bearing (75), in particular a sliding bearing and/or a pivoting bearing, by means of which the support body (70) is mounted so as to be movable between the transport position (TS) and the use position (G) with respect to the workpiece support assembly (50).

9. Supplementary support assembly according to any one of the preceding claims, **characterised in that** at least one component of the supplementary support assembly, in particular the transverse stop body (90), forms a fixing device for fixing at least one component of the workpiece support assembly (50) in a position suitable for transport on the workpiece support body (51) of the workpiece support assembly (50), wherein it is advantageously provided that the at least one component of the workpiece support assembly (50) is a support for supporting the workpiece support body (51), which is fixed or fixable by the component of the supplementary support assembly (60) in a position resting against the workpiece support body (51), in particular in a position pivoted towards the workpiece support body (51).

10. Supplementary support assembly according to any one of the preceding claims, **characterised in that** the support body bearing (85) has two guide seats (77) which extend parallel to a sliding axis of the supporting body bearing (85) and are spaced apart from one another transversely to the sliding axis and in which guide projections are guided parallel to the sliding axis and/or **in that** the pairs of guide seat (77) and guide projection are arranged at opposite longitudinal side regions or edge regions of the support body (70) and/or **in that** the supporting body fixing means (66) have at least one clamp body which can be clamped with one of the guide seats (77) and/or have at least one rear engagement contour, in particular a hook contour, which can be brought into rear engagement with one of the guide seats (77), such that the supporting body (80) is held on the guide seat (77) on all sides transversely to the sliding axis and/or **in that** the support body fixing means (66) are designed and/or provided for fixing the supporting body (80) on opposite sides of the support body (70) and/or **in that** the supporting body (70) and/or the workpiece support body (51) is designed as a profile body and/or as an extruded profile and/or **in that** the support body (70) and/or the workpiece support body (51) have a guide seat (77) with a retaining contour for rear engagement by a rear engagement contour and/or a sliding block and/or **in that** the supporting body (80) and/or the support body (70) and/or the transverse stop body (90) is plate-like.

11. Supplementary support assembly according to any one of the preceding claims, **characterised in that** the supporting body (80) and/or the support body (70) and/or the transverse stop body (90) has at least one opening (170, 180, 190) for the screwing of a body, in particular the workpiece, with the screw (SB) provided with the supporting body (80) or the support body (70) or the transverse stop body (90) and/or at least one retaining receptacle (191) for a retaining body (HK) screwed into the workpiece or a support for the workpiece, in particular for a screw head.

12. Supplementary support assembly according to any one of the preceding claims, **characterised in that** it has a transverse stop body (290) or a template (390) for producing a transverse stop body (290), which has a circumferential contour (297) adapted to an outer circumferential contour of the machine tool (20), comprising in particular a rounding (298) and/or a recess (292), and/or is provided and/or is configured for the connection of the supplementary support assembly (60) to a further, in particular similar, supplementary support assembly (60B) and/or **in that** it is provided and/or designed for mounting on a longitudinal side (58), in particular a longitudinal narrow side, of the workpiece support assembly (50), in particular the workpiece support body (51), wherein the longitudinal side (58) runs along a longitudinal extension of the workpiece support assembly (50) and is longer than a transverse side of the workpiece support assembly (50).

13. Supplementary support assembly according to any one of the preceding claims, **characterised in that** the support body mounting means (61) form bearing components (75A, 75B) of an adjusting bearing (65) with which the supplementary support assembly (60) can be adjusted relative to the workpiece support body (51) between at least two different use positions, in particular longitudinal positions with respect to a longitudinal extension of the workpiece support body (51), in each of which the supplementary supporting surface (81) for supporting a workpiece (W) is available, and/or **in that** the at least one transverse stop face (93, 94) and/or the transverse stop body (90) is adjustable into a region on the base supporting surface (53) and/or into a position supported on the base supporting surface (53) and/or in that the supporting body fixing means (66) and/or the stop body fixing means (99) for mounting the supporting body (80) and the transverse stop body (90) are provided and/or configured on opposite sides of the support body (70) and/or **in that** the support body (70) has a supporting surface (71) for supporting the supporting body (80), which, when the support body (70) mounted on the workpiece support assembly (50), is aligned with an underside (51) of the workpiece support assembly (50) provided for the mounting of the support body (70) and/or rests at least substantially flat against an underside (51) of the workpiece support assembly (50) provided for the mounting of the support body (70), and/or **in that** the support body (70), when the support body (70) is mounted on the workpiece support assembly (50), projects laterally in a shelf-like manner laterally in front of the workpiece support assembly (50) and/or **in that** a distance between the supplementary supporting surface (81) and an underside (82) of the supporting body (80) is equal or substantially equal to a distance between the base supporting surface (53) of the workpiece support assembly (50) and an underside (51) of the workpiece support assembly (50) provided for fastening the support body (70).

14. Workpiece support assembly (50) with a supplementary support assembly (60) according to any one of the preceding claims, wherein it is advantageously provided that it forms a supplementary assembly extending in particular transversely to a working direction of the tool (24) of the machine tool (20) for detachable mounting on the machine tool (20).

15. Machine tool (20), in particular a machine saw, with a workpiece support assembly (50) and a supplementary support assembly (60) according to any one of the preceding claims.

## Revendications

1. Dispositif supplémentaire de support pour un dispositif d'appui de pièce (50) d'une machine-outil (20) semi-stationnaire, en particulier d'une machine à scier, dans lequel un corps d'appui de pièce (51) du dispositif d'appui de pièce (50) présente une surface d'appui de base (53) sensiblement horizontale lors de l'utilisation pour la pose d'une pièce (W1, W2) pour un usinage, en particulier pour une coupe de sciage (SX), par un outil de travail (24) de la machine-outil (20), dans lequel le dispositif supplémentaire de support (60) présente une surface d'appui supplémentaire (81) et un corps porteur (70) avec des moyens de fixation de corps porteur (61) pour la fixation libérable sur le dispositif d'appui de pièce (50), dans lequel dans l'état du dispositif supplémentaire de support (60) fixé sur le dispositif d'appui de pièce (50) la surface d'appui supplémentaire (81) est au moins sensiblement en affleurement avec la surface d'appui de base (53), dans lequel elle présente un corps d'appui (80), qui est monté de manière mobile à l'aide d'un palier de corps d'appui (85) présentant un palier coulissant (85A) et/ou un palier pivotant (85B) sur le corps porteur (70) entre au moins deux positions relatives différentes l'une de l'autre par rapport à la surface d'appui de base (53) et peut être fixé de manière détachable dans les positions relatives sur le corps porteur (70) à l'aide de moyens de fixation de corps d'appui (66), dans lequel le corps d'appui (80) présente la surface d'appui supplémentaire (81) et/ou forme une base de fixation pour un corps de butée transversale (90), qui peut être fixé de manière détachable sur le corps d'appui (80) à l'aide de moyens de fixation de corps de butée (99) et présente au moins une surface de butée transversale (93, 94), qui est angulaire, en particulier perpendiculaire, par rapport à la surface d'appui supplémentaire (81), **caractérisé en ce que** les moyens de fixation de corps d'appui (66) sont formés au moins en partie par les moyens de fixation de corps de butée (99).

2. Dispositif supplémentaire de support selon la revendication 1, **caractérisé en ce que** le corps d'appui (80) présente au moins une surface de butée transversale (193, 194), qui est disposée fixement sur le corps d'appui (80) et est angulaire, en particulier perpendiculaire, par rapport à la surface d'appui supplémentaire (81), et/ou que le corps de butée transversale (90) est monté mobile sur le corps d'appui (80) à l'aide d'un palier de butée transversale (95), lequel comprend un palier pivotant (95B) et/ou un palier coulissant (95A).

3. Dispositif supplémentaire de support selon la revendication 2, **caractérisé en ce que** le palier de butée transversale (95) présente un premier composant de guidage disposé sur le corps d'appui (80) et un deuxième composant de guidage disposé sur le corps de butée transversale (90), dans lequel parmi ceux-ci un composant de guidage est un logement de guidage (97), en particulier une coulisse de guidage ou une fente de guidage, dans laquelle une partie saillante de guidage (67B) de l'autre composant de guidage s'insère et sur laquelle la partie saillante de guidage (67B) est guidée.

4. Dispositif supplémentaire de support selon la revendication 3, **caractérisé en ce qu'**au moins un des composants de guidage comprend ou forme un corps de serrage, en particulier un boulon de serrage, qui a des moyens de fixation de corps de butée (99), dans lequel le corps de butée transversale (90) peut être serré avec le corps d'appui (80) à l'aide du corps de serrage, et/ou que le logement de guidage (97) présente une forme longitudinale et la partie saillante de guidage (67B) est montée mobile longitudinalement le long d'un axe de coulissement dans le logement de guidage (97), dans lequel il est prévu de manière avantageuse que la partie saillante de guidage (67B) soit montée en rotation sur le logement de guidage (97).

5. Dispositif supplémentaire de support selon l'une quelconque des revendications 3 ou 4, **caractérisé en ce que** le logement de guidage (97) s'étend transversalement ou parallèlement à au moins une surface de butée transversale (93, 94) du corps de butée transversale (90) et/ou entre des surfaces de butée transversale (93, 94) opposées l'une à l'autre du corps de butée transversale (90), de sorte que la surface de butée transversale (93, 94) peut être déplacée le long de l'axe de coulissement du logement de guidage (97) par rapport au corps d'appui (80), dans lequel il est prévu de manière avantageuse que le logement de guidage (97) s'étende entre des surfaces de butée transversale (94A, 94B) prévues sur les faces opposées l'une à l'autre du corps de butée transversale (90), dans lequel le logement de guidage (97) présente par rapport à l'une des surfaces de butée transversale (94A) un écart plus important que par rapport à l'autre surface de butée transversale (94B).

6. Dispositif supplémentaire de support selon l'une quelconque des revendications 2 à 5, **caractérisé en ce que** le palier de butée transversale (95) et le palier de corps d'appui (85) présentent au moins deux degrés de liberté de mouvement différents l'un de l'autre, en particulier un palier coulissant avec des axes de coulissement angulaires les uns par rapport aux autres, en particulier perpendiculaires, et/ou que le corps d'appui (80) et le corps de butée transversale (65) sont montés par rapport au corps porteur (70) à la façon d'un chariot porte-outils à mouvements croisés et/ou que le palier de butée transversale (95) est disposé entre les logements de guidage (77) du palier de corps d'appui (85).

7. Dispositif supplémentaire de support selon l'une quelconque des revendications précédentes, **caractérisé en ce que** le corps de butée transversale (90) est monté par rapport au corps porteur (70) à l'aide du corps d'appui (80) de manière télescopique par rapport à au moins un axe télescopique et/ou qu'au moins un corps de retenue (67) et/ou corps d'actionnement des moyens de fixation de corps de butée (99) est prévu et/ou conçu pour la fixation du corps d'appui (80) par rapport au corps porteur (70) et/ou le corps d'appui (80) peut être coincé en sandwich entre le corps porteur (70) et le corps de butée transversale (90).

8. Dispositif supplémentaire de support selon l'une quelconque des revendications précédentes, **caractérisé en ce que** la surface d'appui supplémentaire (81) du corps d'appui (80) fait saillie sur au moins une face, de préférence sur des faces opposées l'une à l'autre, au sens d'un agrandissement d'une surface d'appui totale formée par la surface d'appui de base (53) et la surface d'appui supplémentaire (81) latéralement devant le corps porteur (70) et/ou qu'elle peut être disposée, en particulier peut être fixée, à l'aide des moyens de fixation de corps porteur (61) dans une position de transport (TS) et dans une position d'utilisation (G) sur le dispositif d'appui de pièce (50), dans lequel une partie porteuse (71A) du corps porteur (70) pour porter le corps d'appui (80) dans la position d'utilisation (G) fait davantage saillie du dispositif d'appui de pièce (50) que dans la position de transport (TS), dans lequel il est prévu de manière avantageuse que les moyens de fixation de corps porteur (61) présentent au moins un composant de palier (75A, 75B), en particulier une coulisse de guidage (63) et/ou un logement de palier (64), d'un palier de transport (75), en particulier d'un palier coulissant et/ou d'un palier pivotant, à l'aide duquel le corps porteur (70) est monté mobile par rapport au dispositif d'appui de pièce (50) entre la position de transport (TS) et la position d'utilisation (G).

9. Dispositif supplémentaire de support selon l'une quelconque des revendications précédentes, **caractérisé en ce qu'**au moins un composant du dispositif supplémentaire de support, en particulier le corps de butée transversale (90), forme un dispositif de fixation pour la fixation d'au moins un composant du dispositif d'appui de pièce (50) dans une position adaptée au transport sur le corps d'appui de pièce (51) du dispositif d'appui de pièce (50), dans lequel il est prévu de manière avantageuse que l'au moins un composant du dispositif d'appui de pièce (50) soit un support pour le soutien du corps d'appui de pièce (51), lequel est fixé ou peut être fixé dans une position s'appliquant sur le corps d'appui de pièce (51), en particulier dans une position pivotée en direction du corps d'appui de pièce (51), par le composant du dispositif supplémentaire de support (60).

10. Dispositif supplémentaire de support selon l'une quelconque des revendications précédentes, **caractérisé en ce que** le palier de corps d'appui (85) présente deux logements de guidage (77) s'étendant parallèlement à un axe de coulissement du palier de corps d'appui (85) et espacés l'un de l'autre transversalement par rapport à l'axe de coulissement, dans lesquels des parties saillantes de guidage sont guidées parallèlement à l'axe de coulissement, et/ou que les appariements du logement de guidage (77) et de la partie saillante de guidage sont disposés sur des zones de côté longitudinal ou zones de bord opposées l'une à l'autre du corps porteur (70) et/ou que les moyens de fixation de corps d'appui (66) présentent au moins un corps de serrage, qui peut être coincé avec un des logements de guidage (77), et/ou au moins un contour de prise arrière, en particulier un contour à crochet, qui peut être amené en prise arrière avec un des logements de guidage (77), de sorte que le corps d'appui (80) est maintenu de tous les côtés transversalement par rapport à l'axe de coulissement sur le logement de guidage (77), et/ou que les moyens de fixation de corps d'appui (66) sont conçus et/ou prévus pour la fixation du corps d'appui (80) sur les faces opposées l'une à l'autre du corps porteur (70) et/ou que le corps porteur (70) et/ou le corps d'appui de pièce (51) est conçu en tant que corps profilé et/ou en tant que profilé extrudé et/ou que le corps porteur (70) et/ou le corps d'appui de pièce (51) présentent un logement de guidage (77) avec un contour de retenue pour la prise arrière par un contour de prise arrière et/ou un coulisseau et/ou que le corps d'appui (80) et/ou le corps porteur (70) et/ou le corps de butée transversale (90) est du type plaque.

11. Dispositif supplémentaire de support selon l'une quelconque des revendications précédentes, **caractérisé en ce que** le corps d'appui (80) et/ou le corps porteur (70) et/ou le corps de butée transversale (90) présente au moins une ouverture de passage (170, 180, 190) pour une vis (SB) prévue pour le vissage d'un corps, en particulier de la pièce, avec le corps d'appui (80) ou le corps porteur (70) ou le corps de butée transversale (90) et/ou au moins un logement de retenue (191) pour un corps de retenue (HK) vissé sur la pièce ou un support pour la pièce, en particulier pour une tête de vis.

12. Dispositif supplémentaire de support selon l'une quelconque des revendications précédentes, **caractérisé en ce qu'**il présente un corps de butée transversale (290) ou un gabarit (390) pour la fabrication d'un corps de butée transversale (290), qui présente un contour périphérique adapté à un contour périphérique extérieur de la machine-outil (20), comprenant en particulier un arrondi (298) et/ou un évidement (292) et/ou est prévu et/ou conçu pour la liaison du dispositif supplémentaire de support (60) à un autre dispositif supplémentaire de support (60B), en particulier similaire, et/ou qu'il est prévu et/ou conçu pour un montage sur un côté longitudinal (58), en particulier un côté court longitudinal, du dispositif d'appui de pièce (50), en particulier du corps d'appui de pièce (51), dans lequel le côté longitudinal (58) s'étend le long d'une étendue longitudinale du dispositif d'appui de pièce (50) et est plus long qu'un côté transversal du dispositif d'appui de pièce (50).

13. Dispositif supplémentaire de support selon l'une quelconque des revendications précédentes, **caractérisé en ce que** les moyens de fixation de corps porteur (61) forment des composants de palier (75A, 75B) d'un palier de réglage (65), avec lequel le dispositif supplémentaire de support (60) est déplaçable par rapport au corps d'appui de pièce (51) entre au moins deux positions d'utilisation différentes l'une de l'autre, en particulier positions longitudinales par rapport à une étendue longitudinale du corps d'appui de pièce (51), dans lesquelles respectivement la surface d'appui supplémentaire (81) est prête à la pose d'une pièce (W), et/ou que l'au moins une surface de butée transversale (93, 94) et/ou le corps de butée transversale (90) est déplaçable dans une zone sur la surface d'appui de base (53) et/ou dans une position s'appuyant sur la surface d'appui de base (53) et/ou que les moyens de fixation de corps d'appui (66) et/ou les moyens de fixation de corps de butée (99) sont prévus et/ou conçus pour le montage du corps d'appui (80) et du corps de butée transversale (90) sur les faces opposées l'une à l'autre du corps porteur (70) et/ou que le corps porteur (70) présente une surface d'appui (71) pour la pose du corps d'appui (80), qui dans l'état monté du corps porteur (70) sur le dispositif d'appui de pièce (50) est en affleurement avec une face inférieure (51) du dispositif d'appui de pièce (50) prévue pour la fixation du corps porteur (70) et/ou s'applique au moins sensiblement à plat sur une face inférieure (51) du dispositif d'appui de pièce (50) prévue pour la fixation du corps porteur (70), et/ou que le corps porteur (70) dans l'état du corps porteur (70) monté sur le dispositif d'appui de pièce (50) fait saillie latéralement du dispositif d'appui de pièce (50) à la façon d'une tablette et/ou qu'un écart entre la surface d'appui supplémentaire (81) et une face inférieure (82) du corps d'appui (80) est identique ou sensiblement identique à un écart entre la surface d'appui de base (53) du dispositif d'appui de pièce (50) et une face inférieure (51) du dispositif d'appui de pièce (50) prévue pour la fixation du corps porteur (70).

14. Dispositif d'appui de pièce (50) avec un dispositif supplémentaire de support (60) selon l'une quelconque des revendications précédentes, dans lequel il est prévu de manière avantageuse qu'il forme un dispositif supplémentaire s'étendant en particulier transversalement par rapport à une direction de travail de l'outil de travail (24) de la machine-outil (20) pour la fixation libérable sur la machine-outil (20).

15. Machine-outil (20), en particulier machine à scier, avec un dispositif d'appui de pièce (50) et un dispositif supplémentaire de support (60) selon l'une quelconque des revendications précédentes.
